(19) **Europäisches Patentamt / European Patent Office / Office européen des brevets**

(11) **EP 4 727 232 A1**

(12) **EUROPEAN PATENT APPLICATION**
published in accordance with Art. 153(4) EPC

(43) Date of publication:
**15.04.2026 Bulletin 2026/16**

(21) Application number: **23947139.4**

(22) Date of filing: **03.08.2023**

(51) International Patent Classification (IPC):
***H04W 72/0446*** (2023.01)

(52) Cooperative Patent Classification (CPC):
**H04W 72/0446**

(86) International application number:
**PCT/CN2023/110912**

(87) International publication number:
**WO 2025/025193 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **QIAO, Yunfei**
**Shenzhen, Guangdong 518129 (CN)**
• **LI, Rong**
**Shenzhen, Guangdong 518129 (CN)**

(74) Representative: **Isarpatent**
**Patent- und Rechtsanwälte PartG mbB**
**Friedrichstraße 31**
**80801 München (DE)**

(54) **COMMUNICATION METHOD AND RELATED DEVICE**

(57) This application provides a communication method and a related device, so that a computing capability of a communication node can be applied to artificial intelligence (artificial intelligence, AI) learning, and implementation flexibility of different nodes can be increased. In the method, the first node receives first information, where the first information indicates N pieces of configuration information, the N pieces of configuration information are used to configure resources of N model parameters, and N is a positive integer; and the first node receives a first model parameter based on first configuration information in the N pieces of configuration information, where the first model parameter is used to determine a first neural network model corresponding to local information.

FIG. 4a

Request information    Fifth information    First information

Offset

Time domain

FIG. 4b

Cat0    Cat1    Cat2    Cat3    Cat0    Cat1    Cat2    Cat3

Time domain

Global model parameter

Local model parameter

FIG. 4c

**Description**

**TECHNICAL FIELD**

This application relates to the communication field, and in particular, to a communication method and a related device.

**BACKGROUND**

Wireless communication may be transmission communication performed between two or more communication nodes without propagation using a conductor or a cable. The communication nodes usually include a network device and a terminal device.

Currently, in a wireless communication system, a communication node usually has a signal receiving and sending capability and a computing capability. A network device having a computing capability is used as an example. The computing capability of the network device is mainly to provide computing capability support for a signal receiving and sending capability (for example, perform computing on a time domain resource, a frequency domain resource, and the like for carrying a signal), to implement communication between the network device and another communication node.

However, in a communication network, in addition to providing computing capability support for the foregoing communication task by using the computing capability of the communication node, the communication node may further have a surplus computing capability. Therefore, how to use these computing capabilities is an urgent technical problem to be resolved.

**SUMMARY**

This application provides a communication method and a related device, so that a computing capability of a communication node can be applied to artificial intelligence (artificial intelligence, AI) learning, and implementation flexibility of different nodes can be increased.

According to a first aspect of this application, a communication method is provided. The method is performed by a first node, the method is performed by a part of components (for example, a processor, a chip, or a chip system) in the first node, or the method may be implemented by a logical module or software that can implement all or some functions of the first node. In the first aspect and possible implementations of the first aspect, an example in which the method is performed by the first node is used for description. In the method, the first node receives first information, where the first information indicates N pieces of configuration information, the N pieces of configuration information are used to configure resources of N model parameters, and N is a positive integer; and the first node receives a first model parameter based on first configuration information in the N pieces of configuration information, where the first model parameter is used to determine a first neural network model corresponding to local information.

Based on the foregoing technical solution, the first information received by the first node indicates the N pieces of configuration information, and the N pieces of configuration information are used to configure the resources of the N model parameters. Then, the first node receives the first model parameter based on a resource configured by using the first configuration information in the N pieces of configuration information, and the first node may determine, based on the first model parameter, the first neural network model corresponding to the local information. In other words, different first nodes may obtain, based on the first information, neural network models corresponding to respective local information, and may subsequently participate in AI learning based on the locally obtained neural network models. Compared with an implementation in which different nodes participate in AI learning based on randomized neural network models, in the foregoing technical solution, different nodes may participate in AI learning based on the neural network models corresponding to the respective local information. Therefore, when a communication node in a communication system serves as a node participating in AI learning, a computing capability of the communication node can be applied to an AI task in a learning system, and implementation flexibility of different nodes can be increased.

In addition, local information of different nodes is usually different. In the foregoing technical solution, the first node can determine, based on the first information, the neural network model corresponding to the local information. Therefore, different first nodes can participate in AI learning based on the neural network models that adapt to the local information, to improve processing efficiency of the neural network model.

Optionally, AI learning may be replaced with machine learning, AI processing, AI neural network processing, or the like.

It should be understood that the resources configured by using the N pieces of configuration information include one or more of a time domain resource, a frequency domain resource, and a space domain resource.

It should be understood that in the N model parameters configured by using the N pieces of configuration information, the model parameter is used to initialize the neural network model, or in other words, the model parameter includes an initialization parameter of the neural network model. The initialization parameter may be a parameter used to determine to use the neural network model, or the initialization parameter may be a parameter used to determine to start training of the neural network model. In other words, for the first node, after the first node receives the first model parameter based on the first configuration information, the first node may perform initialization processing on the neural network model based on the first model parameter, to obtain the first neural network model corresponding to the local information; or the first node may use the first model parameter as the initialization parameter of the neural network model, and obtain the first neural network model after completing local parameter initialization.

In a possible implementation of the first aspect, the local information includes at least one of a local resource overhead level, local AI capability information, and a local parameter size.

Based on the foregoing technical solution, the local information may be implemented in a plurality of manners, to provide flexibility of implementing the solution.

It should be understood that the local resource overhead level may be understood as utilization of a local computing resource, utilization of a local storage resource, usage of local power consumption, or the like. For example, the local computing resource may include a resource of a module/component such as a central processing unit (central processor unit, CPU), a micro controller unit (micro controller unit, MCU), or a graphics processing unit (graphics processing unit, GPU). The local storage resource may include a resource of a module/component such as a read-only memory (read-only memory, ROM) or a random access memory (random access memory, RAM). The usage of the local power consumption may include a health status of a battery module, a current used power (or power percentage) of the battery module, a current unused power (or power percentage) of the battery module, and the like.

It should be understood that the local AI capability information may include local AI-related capability information, for example, an AI-related computing capability and storage capability. Similarly, the AI-related computing capability may include a computing capability of the module/component such as the CPU, the MCU, or the GPU, and the AI-related storage capability may include a storage capability of the module/component such as the ROM or the RAM.

It should be understood that the local parameter size may be understood as a parameter size of a local neural network model of the first node, including but not limited to a quantity of neural network layers of the neural network model, a quantity of neurons of the neural network model, an input/output of the neural network model, or computing complexity of the neural network model varies.

It should be noted that the local information of the first node may be implemented in a plurality of manners. Correspondingly, for the first node, after the first node receives the first model parameter, the first node may determine, in a plurality of manners, the first neural network model corresponding to the local information.

In an implementation example, for example, the local information includes the local resource overhead level. The local resource overhead level may be reflected by CPU utilization (also referred to as CPU occupation). The first node may determine a mapping relationship between different CPU utilization and different neural network models in a configuration or pre-configuration manner. For example, different neural network models include a first-type neural network model and a second-type neural network model. The first-type neural network model may be more complex than the second-type neural network model (for example, a scale of a model parameter is larger, and a quantity of neural network layers of the model is larger). The mapping relationship may indicate that a node whose CPU utilization is 0 to X% (a value of X is greater than 0 and less than 100) corresponds to the first-type neural network model, and indicate that a node whose CPU utilization is X% to 100% corresponds to the second-type neural network model. Therefore, in the foregoing technical solution, the first node may compare local CPU utilization with X%. When the local CPU utilization is less than or equal to X%, the first neural network model obtained by the first node based on the first model parameter may be the first-type neural network model. When the local CPU utilization is greater than or equal to X%, the first neural network model obtained by the first node based on the first model parameter may be the second-type neural network model.

Optionally, in the foregoing implementation example, measurement on the CPU utilization may be determined on the premise that the node executes same or similar computing parameters, that is, the CPU utilization is determined in a relatively fair case. For example, for training of two models, when input parameters are the same, CPU utilization required by different nodes to complete a round of training is different. For example, when CPU utilization of a node is low, it may be understood as that a CPU of the node has a strong computing capability, and initialization processing may be performed based on a large model parameter size (or a complex model parameter). When CPU utilization of a node is high, it may be understood as that a CPU of the node has a weak computing capability, and initialization processing may be performed based on a small model parameter size (or a simplified model parameter). Correspondingly, based on the difference, different model parameters may be configured for the different nodes, so that each node can obtain a differentiated (or personalized) initialized neural network model.

In another implementation example, for example, the local information includes the local AI capability information. The local AI capability information may be reflected by using a storage capability of a RAM. The first node may determine a mapping relationship between different storage capabilities of RAMs and different neural network models in a configuration or pre-configuration manner. For example, different neural network models include a first-type neural network model, a second-type neural network model, and a third-type neural network model. The first-type neural network model may be more complex than the second-type neural network model (for example, a scale of a model parameter is larger, and a quantity of neural network layers of the model is larger), and the second-type neural network model may be more complex than the third-type neural network model. The mapping relationship may indicate that a node whose storage capability of the RAM is 0 to Y gigabytes (Gigabyte, GB) (a value of Y is greater than 0) corresponds to the first-type neural network model, indicate that a node whose storage capability of the RAM is greater than Y GB and less than or equal to Z GB (a value of Z is greater than that of Y) corresponds to the second-type neural network model, and indicate that a node whose storage capability of the RAM is greater than Z GB corresponds to the third-type neural network model. Therefore, in the foregoing technical solution, the first node may compare a local storage capability of a RAM with Y and Z. When the local storage capability of the RAM is less than or equal to Y GB, the first neural network model obtained by the first node based on the first model parameter may be the first-type neural network model. When the local storage capability of the RAM is greater than Y GB and less than or equal to Z GB, the first neural network model obtained by the first node based on the first model parameter may be the second-type neural network model. When the local storage capability of the RAM is greater than Z GB, the first neural network model obtained by the first node based on the first model parameter may be the third-type neural network model.

In a possible implementation of the first aspect, the model parameter includes at least one of a weight of a model, an activation function of the model, and an offset of the model.

Based on the foregoing technical solution, the N model parameters transmitted on the resources configured by using the N pieces of configuration information include at least one of the foregoing, to increase flexibility of implementing the solution.

In a possible implementation of the first aspect, N is an integer greater than 1, parameter sizes of the N model parameters are different, and the method further includes: The first node determines the first configuration information in the N pieces of configuration information based on the local information.

Based on the foregoing technical solution, when the N pieces of configuration information indicated by the first information is greater than 1, the parameter sizes of the N model parameters configured by using the N pieces of configuration information are different, so that the first node can determine, in the N pieces of configuration information based on the local information, the first configuration information corresponding to the local information, and the first node can obtain, based on the first configuration information, the model parameter corresponding to the local information.

It should be understood that, that the parameter sizes of the N model parameters are different may be understood as that the N model parameters have different requirements for the local information of the node. For example, the local information includes the local resource overhead level. A model parameter with a large parameter size in the N model parameters requires the local resource overhead level to be lower than a threshold, so that more unused resources are provided to process the model parameter with the large parameter size. For another example, the local information includes the local AI capability information. A model parameter with a large parameter size in the N model parameters requires the local AI capability information to be greater than a threshold, so that more AI resources are provided to process the model parameter with the large parameter size.

Optionally, that the parameter sizes of the N model parameters are different may be replaced with another description. For example, the N model parameters correspond to different quantities of neural network layers, the N model parameters correspond to different neurons, the N model parameters correspond to different inputs/outputs, the N model parameters have different computing complexity, the N model parameters have different computing capability requirements, or the N model parameters have different storage capability requirements.

In a possible implementation of the first aspect, a value of N is 1, the first model parameter is used to configure a neural network model shared by at least two first nodes, and the method further includes: The first node performs, based on the local information, knowledge distillation processing on the neural network model shared by the at least two first nodes, to obtain the first neural network model.

Based on the foregoing technical solution, when the N pieces of configuration information indicated by the first information is one piece of configuration information (that is, the first configuration information), the first model parameter configured by using the first configuration information is used to configure the neural network model shared by the at least two first nodes, so that the at least two first nodes can obtain the shared neural network model based on the first configuration information, and perform knowledge distillation processing on the shared neural network model based on respective local information, to obtain the first neural network model corresponding to the local information.

It should be understood that the neural network model shared by the at least two first nodes may be understood as a neural network model that can be identified/processed by the at least two first nodes. Alternatively, the neural network model shared by the at least two first nodes may be described as a neural network model commonly used by the at least two first nodes or a neural network model that can be identified/processed by the at least two first nodes.

In a possible implementation of the first aspect, the method further includes: The first node receives second information, where the second information indicates M pieces of configuration information, the M pieces of configuration information are used to configure transmission resources of M model parameters, parameter sizes of the M model parameters are different, and M is an integer greater than 1. The first node receives a second model parameter based on second configuration information in the M pieces of configuration information, where a parameter size of the second model parameter and the local parameter size are the same (or similar, for example, a difference between the parameter size of the second model parameter and the local parameter size is less than a threshold).

Based on the foregoing technical solution, the first node may further receive the second information indicating the M pieces of configuration information, and receive, based on the second configuration information in the M pieces of configuration information, the second model parameter whose parameter size is the same as (or similar to) the local parameter size. In other words, different first nodes may receive, by using the second information, a model parameter whose parameter size is the same as (or similar to) a parameter size of the respective local information, and perform AI processing (for example, local training) based on the received model parameter.

It should be understood that the transmission resources configured by using the M pieces of configuration information are used by different first nodes to receive one of the M model parameters, so that the different first nodes can subsequently perform AI processing (for example, local training) based on the received model parameter. Correspondingly, the M model parameters may be understood as global model parameters of a plurality of first nodes, that is, the M model parameters may be replaced with M global model parameters.

Optionally, any one of the M model parameters may include a gradient, a weight, and/or the like. For example, the gradient and/or the weight are/is used for further processing of an initialized neural network model (for example, the first neural network model described above), for example, training of the neural network model, and updating of the neural network model.

Similarly, that the parameter sizes of the M model parameters are different may be replaced with another description. For example, the M model parameters correspond to different quantities of neural network layers, the M model parameters correspond to different neurons, the M model parameters correspond to different inputs/outputs, the M model parameters have different computing complexity, the M model parameters have different computing capability requirements, or the M model parameters have different storage capability requirements.

In a possible implementation of the first aspect, any one of the M pieces of configuration information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

Based on the foregoing technical solution, any one of the M pieces of configuration information indicated by the second information may include at least one of the foregoing, to increase flexibility of implementing the solution.

Optionally, any one of the N pieces of configuration information indicated by the first information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

In a possible implementation of the first aspect, the method further includes: The first node receives third information, where the third information indicates K pieces of configuration information, the K pieces of configuration information are used to configure transmission resources of K model parameters, parameter sizes of the K model parameters are different, and K is an integer greater than 1. The first node sends a third model parameter based on third configuration information in the K pieces of configuration information, where a parameter size of the third model parameter and the local parameter size are the same (or similar, for example, a difference between the parameter size of the third model parameter and the local parameter size is less than a threshold).

Based on the foregoing technical solution, the first node may further receive the third information indicating the K pieces of configuration information, and receive, based on the third configuration information in the K pieces of configuration information, the third model parameter whose parameter size is the same as (or similar to) the local parameter size. In other words, different first nodes may send, by using the third information, a model parameter whose parameter size is the same as (or similar to) a parameter size of the respective local information, so that a receiver of the model parameter can perform AI processing (for example, parameter fusion processing) on model parameters sent by the different first nodes.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the first aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

It should be understood that, when the any one piece of configuration information includes the indication information indicating the index of the transmission resource of the one piece of configuration information in the transmission resources configured by using the K pieces of configuration information, it may be understood as that the second node configures a transmission resource set (including at least one of a time domain resource, a frequency domain resource, and a space domain resource) for the K pieces of configuration information, so that the first node can determine the corresponding transmission resource in the transmission resource set based on the index in the indication information.

Based on the foregoing technical solution, any one of the K pieces of configuration information indicated by the third information may include at least one of the foregoing, to increase flexibility of implementing the solution.

In a possible implementation of the first aspect, before the first node receives the first information, the method further includes: The first node receives fourth information, where the fourth information indicates a resource for carrying request information, and the request information is used to request the N pieces of configuration information. The first node sends the request information on the resource for carrying the request information.

Based on the foregoing technical solution, the first node may further receive the fourth information indicating the resource for carrying the request information, where the request information is used to request the N pieces of configuration information, so that the first node can obtain the N pieces of configuration information by using the first information after sending the request information based on the resource indicated by the fourth information.

In a possible implementation of the first aspect, the request information includes a first orthogonal sequence, and the first orthogonal sequence corresponds to the local information.

Optionally, the first orthogonal sequence is included in P orthogonal sequences, and the P orthogonal sequences respectively correspond to different local information. In other words, different first nodes can determine one orthogonal sequence in the P orthogonal sequences based on the respective local information, and send the orthogonal sequence to the second node, so that a receiver (for example, the second node) of the request information can learn of the local information of each first node based on the received request information.

Optionally, when P is greater than 1, different sequences may be in an orthogonal relationship, that is, the P sequences may be described as P orthogonal sequences, so that the P orthogonal sequences can also be identified by the receiver when being transmitted on a same resource. In another implementation, the P sequences may alternatively be identified by the receiver in another manner, for example, by staggering a frequency domain resource and a time domain resource. In other words, the P orthogonal sequences may be replaced with P sequences, and the first orthogonal sequence may be replaced with a first sequence.

In addition, when the second node serves as the receiver of the request information, the second node can determine the local information of each first node based on the one or more received orthogonal sequences, and may use the local information of each first node as a basis for determining at least one of the N pieces of configuration information, the M pieces of configuration information, and the K pieces of configuration information, so that each piece of configuration information sent by the second node can adapt to the local information of each first node.

In addition, because different first nodes can indicate local parameter sizes of the first nodes by using the request information, overheads can be reduced.

Optionally, in addition to determining, based on the fourth information, the resource for carrying the first orthogonal sequence, the first node may alternatively determine, in another manner (for example, a pre-configuration manner), the resource for carrying the first orthogonal sequence. This is not limited herein.

Optionally, a value of P may be greater than or equal to a value of N. For example, the first node may learn of, in a configuration or pre-configuration manner, different parameter sizes respectively corresponding to the P orthogonal sequences, and the second node may determine the parameter size of each first node by receiving request information from one or more first nodes. Correspondingly, the second node may further generate the N pieces of configuration information based on the determined parameter size of each first node. Generally, the P orthogonal sequences may be set redundantly (that is, P is greater than or equal to N), so that each first node can indicate the local parameter size of the first node by using the request information.

In a possible implementation of the first aspect, before the first node receives the first information, the method further includes: The first node receives fifth information, where the fifth information indicates local information corresponding to each of the N model parameters, and/or the fifth information indicates whether the first information includes the N pieces of configuration information.

Based on the foregoing technical solution, the first node may further receive the fifth information, to learn of related information of the N pieces of configuration information by using the fifth information, and determine, based on the learned information, whether to receive the N pieces of configuration information, to avoid unnecessary detection by the first node, thereby reducing overheads.

In a possible implementation of the first aspect, before the first node receives the third information, the method further includes: The first node receives sixth information, where the sixth information indicates local information corresponding to each of the M model parameters, and/or the sixth information indicates whether the third information includes the M pieces of configuration information.

Based on the foregoing technical solution, the first node may further receive the sixth information, to learn of related information of the M pieces of configuration information by using the sixth information, and determine, based on the learned information, whether to receive the M pieces of configuration information, to avoid unnecessary detection by the first node, thereby reducing overheads.

In a possible implementation of the first aspect, before the first node receives the second information, the method further includes: The first node receives seventh information, where the seventh information indicates local information corresponding to each of the K model parameters, and/or the seventh information indicates whether the second information includes the K pieces of configuration information.

Based on the foregoing technical solution, the first node may further receive the seventh information, to learn of related information of the K pieces of configuration information by using the seventh information, and determine, based on the learned information, whether to receive the K pieces of configuration information, to avoid unnecessary detection by the first node, thereby reducing overheads.

According to a second aspect of this application, a communication method is provided. The method is performed by a second node, the method is performed by a part of components (for example, a processor, a chip, or a chip system) in the second node, or the method may be implemented by a logical module or software that can implement all or some functions of the second node. In the second aspect and possible implementations of the second aspect, an example in which the method is performed by the second node is used for description. In the method, the second node determines first information, where the first information indicates N pieces of configuration information, the N pieces of configuration information are used to configure resources of N model parameters, N is a positive integer, and one of the N model parameters is used to determine a neural network model corresponding to local information of a first node; and the second node sends the first information.

Based on the foregoing technical solution, the first information sent by the second node indicates the N pieces of configuration information, and the N pieces of configuration information are used to configure the resources of the N model parameters. Then, after the first node receives the first information, the first node may receive a first model parameter based on a resource configured by using first configuration information in the N pieces of configuration information, and the first node may determine, based on the first model parameter, a first neural network model corresponding to the local information. In other words, different first nodes may obtain, based on the first information, neural network models corresponding to respective local information, and may subsequently participate in AI learning based on the locally obtained neural network models. Compared with an implementation in which different nodes participate in AI learning based on randomized neural network models, in the foregoing technical solution, different nodes may participate in AI learning based on the neural network models corresponding to the respective local information. Therefore, when a communication node in a communication system serves as a node participating in AI learning, a computing capability of the communication node can be applied to an AI task in a learning system, and implementation flexibility of different nodes can be increased.

In addition, local information of different nodes is usually different. In the foregoing technical solution, the first node can determine, based on the first information, the neural network model corresponding to the local information. Therefore, different first nodes can participate in AI learning based on the neural network models that adapt to the local information, to improve processing efficiency of the neural network model.

Optionally, different first nodes may be distributed nodes, and the second node may be connected to one or more first nodes and serve as a central node (or a control node, a management node, or the like) of the one or more first nodes.

In a possible implementation of the second aspect, the local information includes at least one of a local resource overhead level, local AI capability information, and a local parameter size.

Based on the foregoing technical solution, the local information may be implemented in a plurality of manners, to provide flexibility of implementing the solution.

It should be understood that the local resource overhead level may be understood as utilization of a local computing resource, utilization of a local storage resource, usage of local power consumption, or the like. For example, the local computing resource may include a resource of a module/component such as a central processing unit (central processor unit, CPU), a micro controller unit (micro controller unit, MCU), or a graphics processing unit (graphics processing unit, GPU). The local storage resource may include a resource of a module/component such as a read-only memory (read-only memory, ROM) or a random access memory (random access memory, RAM). The usage of the local power consumption may include a health status of a battery module, a current used power (or power percentage) of the battery module, a current unused power (or power percentage) of the battery module, and the like.

It should be understood that the local AI capability information may include local AI-related capability information, for example, an AI-related computing capability and storage capability. Similarly, the AI-related computing capability may include a computing capability of the module/component such as the CPU, the MCU, or the GPU, and the AI-related storage capability may include a storage capability of the module/component such as the ROM or the RAM.

In a possible implementation of the second aspect, the model parameter includes at least one of a weight of a model, an activation function of the model, and an offset of the model.

Based on the foregoing technical solution, the N model parameters transmitted on the resources configured by using the N pieces of configuration information include at least one of the foregoing, to increase flexibility of implementing the solution.

In a possible implementation of the second aspect, N is an integer greater than 1, and parameter sizes of the N model parameters are different.

Based on the foregoing technical solution, when the N pieces of configuration information indicated by the first information is greater than 1, the parameter sizes of the N model parameters configured by using the N pieces of configuration information are different, so that the first node can determine, in the N pieces of configuration information based on the local information, the first configuration information corresponding to the local information, and the first node can obtain, based on the first configuration information, the model parameter corresponding to the local information.

It should be understood that, that the parameter sizes of the N model parameters are different may be understood as that the N model parameters have different requirements for the local information of the node. For example, the local information includes the local resource overhead level. A model parameter with a large parameter size in the N model parameters requires the local resource overhead level to be lower than a threshold, so that more unused resources are provided to process the model parameter with the large parameter size. For another example, the local information includes the local AI capability information. A model parameter with a large parameter size in the N model parameters requires the local AI capability information to be greater than a threshold, so that more AI resources are provided to process the model parameter with the large parameter size.

Optionally, that the parameter sizes of the N model parameters are different may be replaced with another description. For example, the N model parameters correspond to different quantities of neural network layers, the N model parameters correspond to different neurons, the N model parameters correspond to different inputs/outputs, the N model parameters have different computing complexity, the N model parameters have different computing capability requirements, or the N model parameters have different storage capability requirements.

In a possible implementation of the second aspect, a value of N is 1.

Based on the foregoing technical solution, when the N pieces of configuration information indicated by the first information is one piece of configuration information (that is, the first configuration information), the first model parameter configured by using the first configuration information is used to configure the neural network model shared by the at least two first nodes, so that the at least two first nodes can obtain the shared neural network model based on the first configuration information, and perform knowledge distillation processing on the shared neural network model based on respective local information, to obtain the first neural network model corresponding to the local information.

It should be understood that the neural network model shared by the at least two first nodes may be understood as a neural network model that can be identified/processed by the at least two first nodes. Alternatively, the neural network model shared by the at least two first nodes may be described as a neural network model commonly used by the at least two first nodes or a neural network model that can be identified/processed by the at least two first nodes.

In a possible implementation of the second aspect, the method further includes: The second node sends second information, where the second information indicates M pieces of configuration information, the M pieces of configuration information are used to configure transmission resources of M model parameters, parameter sizes of the M model parameters are different, and M is an integer greater than 1. The second node sends a part or all of the M model parameters based on the M pieces of configuration information.

Based on the foregoing technical solution, the first node may further receive the second information indicating the M pieces of configuration information, and receive, based on the second configuration information in the M pieces of configuration information, the second model parameter whose parameter size is the same as (or similar to) the local parameter size. In other words, different first nodes may receive, by using the second information, a model parameter whose parameter size is the same as (or similar to) a parameter size of the respective local information, and perform AI processing (for example, local training) based on the received model parameter.

It should be understood that the transmission resources configured by using the M pieces of configuration information are used by different first nodes to receive one of the M model parameters, so that the different first nodes can subsequently perform AI processing (for example, local training) based on the received model parameter. Correspondingly, the M model parameters may be understood as global model parameters of a plurality of first nodes, that is, the M model parameters may be replaced with M global model parameters.

Optionally, any one of the M model parameters may include a gradient, a weight, and/or the like. For example, the gradient and/or the weight are/is used for further processing of an initialized neural network model (for example, the first neural network model described above), for example, training of the neural network model, and updating of the neural network model.

Similarly, that the parameter sizes of the M model parameters are different may be replaced with another description. For example, the M model parameters correspond to different quantities of neural network layers, the M model parameters correspond to different neurons, the M model parameters correspond to different inputs/outputs, the M model parameters have different computing complexity, the M model parameters have different computing capability requirements, or the M model parameters have different storage capability requirements.

In a possible implementation of the second aspect, any one of the M pieces of configuration information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

Based on the foregoing technical solution, any one of the M pieces of configuration information indicated by the second information may include at least one of the foregoing, to increase flexibility of implementing the solution.

In a possible implementation of the second aspect, the method further includes: The second node sends third information, where the third information indicates K pieces of configuration information, the K pieces of configuration information are used to configure transmission resources of K model parameters, parameter sizes of the K model parameters are different, and K is an integer greater than 1. The second node receives a part or all of the K model parameters based on the K pieces of configuration information.

Based on the foregoing technical solution, the first node may further receive the third information indicating the K pieces of configuration information, and receive, based on the third configuration information in the K pieces of configuration information, the third model parameter whose parameter size is the same as (or similar to) the local parameter size. In other words, different first nodes may send, by using the third information, a model parameter whose parameter size is the same as (or similar to) a parameter size of the respective local information, so that a receiver of the model parameter can perform AI processing (for example, parameter fusion processing) on model parameters sent by the different first nodes.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the second aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

Based on the foregoing technical solution, any one of the K pieces of configuration information indicated by the third information may include at least one of the foregoing, to increase flexibility of implementing the solution.

In a possible implementation of the second aspect, before the second node sends the first information, the method further includes: The second node sends fourth information, where the fourth information indicates a resource for carrying request information, and the request information is used to request the N pieces of configuration information. The second node receives the request information on the resource for carrying the request information.

Based on the foregoing technical solution, the second node may further send the fourth information indicating the resource for carrying the request information, where the request information is used to request the N pieces of configuration information, so that the first node can obtain the N pieces of configuration information by using the first information after sending the request information based on the resource indicated by the fourth information.

In a possible implementation of the second aspect, the request information includes a first orthogonal sequence, and the first orthogonal sequence corresponds to the local information.

Optionally, the first orthogonal sequence is included in P orthogonal sequences, and the P orthogonal sequences respectively correspond to different local information. In other words, different first nodes can determine one orthogonal sequence in the P orthogonal sequences based on the respective local information, and send the orthogonal sequence to the second node, so that a receiver (for example, the second node) of the request information can learn of the local information of each first node based on the received request information.

Optionally, when P is greater than 1, different sequences may be in an orthogonal relationship, that is, the P sequences may be described as P orthogonal sequences, so that the P orthogonal sequences can also be identified by the receiver when being transmitted on a same resource. In another implementation, the P sequences may alternatively be identified by the receiver in another manner, for example, by staggering a frequency domain resource and a time domain resource. In other words, the P orthogonal sequences may be replaced with P sequences, and the first orthogonal sequence may be replaced with a first sequence.

In addition, when the second node serves as the receiver of the request information, the second node can determine the local information of each first node based on the one or more received orthogonal sequences, and may use the local information of each first node as a basis for determining at least one of the N pieces of configuration information, the M pieces of configuration information, and the K pieces of configuration information, so that each piece of configuration information sent by the second node can adapt to the local information of each first node.

In addition, because different first nodes can indicate local parameter sizes of the first nodes by using the request information, overheads can be reduced.

Optionally, in addition to determining, based on the fourth information, the resource for carrying the first orthogonal sequence, the first node may alternatively determine, in another manner (for example, a pre-configuration manner), the resource for carrying the first orthogonal sequence. This is not limited herein.

In a possible implementation of the second aspect, before the second node sends the first information, the method further includes: The second node sends fifth information, where the fifth information indicates local information corresponding to each of the N model parameters, and/or the fifth information indicates whether the first information includes the N pieces of configuration information.

Based on the foregoing technical solution, the second node may further send the fifth information, so that the first node can learn of related information of the N pieces of configuration information by using the fifth information, and determine, based on the learned information, whether to receive the N pieces of configuration information, to avoid unnecessary detection by the first node, thereby reducing overheads.

In a possible implementation of the second aspect, before the second node sends the third information, the method further includes: The second node sends sixth information, where the sixth information indicates local information corresponding to each of the M model parameters, and/or the sixth information indicates whether the third information includes the M pieces of configuration information.

Based on the foregoing technical solution, the second node may further send the sixth information, to learn of related information of the M pieces of configuration information by using the sixth information, and determine, based on the learned information, whether to receive the M pieces of configuration information, to avoid unnecessary detection by the first node, thereby reducing overheads.

In a possible implementation of the second aspect, before the second node sends the second information, the method further includes: The second node sends seventh information, where the seventh information indicates local information corresponding to each of the K model parameters, and/or the seventh information indicates whether the second information includes the K pieces of configuration information.

Based on the foregoing technical solution, the second node may further send the seventh information, to learn of related information of the K pieces of configuration information by using the seventh information, and determine, based on the learned information, whether to receive the K pieces of configuration information, to avoid unnecessary detection by the first node, thereby reducing overheads.

According to a third aspect of this application, a communication method is provided. The method is performed by a first node, the method is performed by a part of components (for example, a processor, a chip, or a chip system) in the first node, or the method may be implemented by a logical module or software that can implement all or some functions of the first node. In the third aspect and possible implementations of the third aspect, an example in which the method is performed by the first node is used for description. In the method, the first node receives second information, where the second information indicates M pieces of configuration information, the M pieces of configuration information are used to configure transmission resources of M model parameters, parameter sizes of the M model parameters are different, and M is an integer greater than 1; and the first node receives a second model parameter based on second configuration information in the M pieces of configuration information, where a parameter size of the second model parameter and the local parameter size are the same (or similar, for example, a difference between the parameter size of the second model parameter and the local parameter size is less than a threshold).

Based on the foregoing technical solution, the second information received by the first node indicates the M pieces of configuration information, and the M pieces of configuration information are used to configure the resources of the M model parameters. Then, the first node receives the second model parameter based on a resource configured by using the second configuration information in the M pieces of configuration information, and the parameter size of the second model parameter is the same as (or similar to) the local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

In a possible implementation of the third aspect, the first node may determine the second configuration information in the M pieces of configuration information based on the local information, where the local information includes at least one of a local resource overhead level, local AI capability information, and a local parameter size.

Based on the foregoing technical solution, the local information may be implemented in a plurality of manners, to provide flexibility of implementing the solution.

It should be understood that the local resource overhead level may be understood as utilization of a local computing resource, utilization of a local storage resource, usage of local power consumption, or the like. For example, the local computing resource may include a resource of a module/component such as a central processing unit (central processor unit, CPU), a micro controller unit (micro controller unit, MCU), or a graphics processing unit (graphics processing unit, GPU). The local storage resource may include a resource of a module/component such as a read-only memory (read-only memory, ROM) or a random access memory (random access memory, RAM). The usage of the local power consumption may include a health status of a battery module, a current used power (or power percentage) of the battery module, a current unused power (or power percentage) of the battery module, and the like.

It should be understood that the local AI capability information may include local AI-related capability information, for example, an AI-related computing capability and storage capability. Similarly, the AI-related computing capability may include a computing capability of the module/component such as the CPU, the MCU, or the GPU, and the AI-related storage capability may include a storage capability of the module/component such as the ROM or the RAM.

It should be understood that the transmission resources configured by using the M pieces of configuration information are used by different first nodes to receive one of the M model parameters, so that the different first nodes can subsequently perform AI processing (for example, local training) based on the received model parameter. Correspondingly, the M model parameters may be understood as global model parameters of a plurality of first nodes, that is, the M model parameters may be replaced with M global model parameters.

Optionally, any one of the M model parameters may include a gradient, a weight, and/or the like. For example, the gradient and/or the weight are/is used for further processing of an initialized neural network model (for example, the first neural network model described above), for example, training of the neural network model, and updating of the neural network model.

Similarly, that the parameter sizes of the M model parameters are different may be replaced with another description. For example, the M model parameters correspond to different quantities of neural network layers, the M model parameters correspond to different neurons, the M model parameters correspond to different inputs/outputs, the M model parameters have different computing complexity, the M model parameters have different computing capability requirements, or the M model parameters have different storage capability requirements.

In a possible implementation of the third aspect, the model parameter includes at least one of a weight of a model, an activation function of the model, and an offset of the model.

Based on the foregoing technical solution, the M model parameters transmitted on the resources configured by using the M pieces of configuration information include at least one of the foregoing, to increase flexibility of implementing the solution.

In a possible implementation of the third aspect, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

Based on the foregoing technical solution, the first node can determine, in the M pieces of configuration information based on the local information, the second configuration information corresponding to the local information, so that the first node can obtain, based on the second configuration information, the model parameter corresponding to the local information.

In a possible implementation of the third aspect, the method further includes: The first node receives third information, where the third information indicates K pieces of configuration information, the K pieces of configuration information are used to configure transmission resources of K model parameters, parameter sizes of the K model parameters are different, and K is an integer greater than 1. The first node sends a third model parameter based on third configuration information in the K pieces of configuration information, where a parameter size of the third model parameter and the local parameter size are the same (or similar, for example, a difference between the parameter size of the third model parameter and the local parameter size is less than a threshold).

Based on the foregoing technical solution, the first node may further receive the third information indicating the K pieces of configuration information, and receive, based on the third configuration information in the K pieces of configuration information, the third model parameter whose parameter size is the same as (or similar to) the local parameter size. In other words, different first nodes may send, by using the third information, a model parameter whose parameter size is the same as (or similar to) a parameter size of the respective local information, so that a receiver of the model parameter can perform AI processing (for example, parameter fusion processing) on model parameters sent by the different first nodes.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the third aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

Based on the foregoing technical solution, any one of the K pieces of configuration information indicated by the third information may include at least one of the foregoing, to increase flexibility of implementing the solution.

In a possible implementation of the third aspect, before the first node receives the third information, the method further includes: The first node receives sixth information, where the sixth information indicates local information corresponding to each of the M model parameters, and/or the sixth information indicates whether the third information includes the M pieces of configuration information.

Based on the foregoing technical solution, the first node may further receive the sixth information, to learn of related information of the M pieces of configuration information by using the sixth information, and determine, based on the learned information, whether to receive the M pieces of configuration information, to avoid unnecessary detection by the first node, thereby reducing overheads.

In a possible implementation of the third aspect, before the first node receives the second information, the method further includes: The first node receives seventh information, where the seventh information indicates local information corresponding to each of the K model parameters, and/or the seventh information indicates whether the second information includes the K pieces of configuration information.

Based on the foregoing technical solution, the first node may further receive the seventh information, to learn of related information of the K pieces of configuration information by using the seventh information, and determine, based on the learned information, whether to receive the K pieces of configuration information, to avoid unnecessary detection by the first node, thereby reducing overheads.

According to a fourth aspect of this application, a communication method is provided. The method is performed by a second node, the method is performed by a part of components (for example, a processor, a chip, or a chip system) in the second node, or the method may be implemented by a logical module or software that can implement all or some functions of the second node. In the fourth aspect and possible implementations of the fourth aspect, an example in which the method is performed by the second node is used for description. In the method, the second node determines second information, where the second information indicates M pieces of configuration information, the M pieces of configuration information are used to configure transmission resources of M model parameters, parameter sizes of the M model parameters are different, and M is an integer greater than 1; and the second node sends the second information.

Based on the foregoing technical solution, the second information sent by the second node indicates the M pieces of configuration information, and the M pieces of configuration information are used to configure the resources of the M model parameters. Then, after the first node receives the second information, the first node receives the second model parameter based on a resource configured by using second configuration information in the M pieces of configuration information, and a parameter size of the second model parameter is the same as (or similar to) a local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

It should be understood that the transmission resources configured by using the M pieces of configuration information are used by different first nodes to receive one of the M model parameters, so that the different first nodes can subsequently perform AI processing (for example, local training) based on the received model parameter. Correspondingly, the M model parameters may be understood as global model parameters of a plurality of first nodes, that is, the M model parameters may be replaced with M global model parameters.

Optionally, any one of the M model parameters may include a gradient, a weight, and/or the like. For example, the gradient and/or the weight are/is used for further processing of an initialized neural network model (for example, the first neural network model described above), for example, training of the neural network model, and updating of the neural network model.

Similarly, that the parameter sizes of the M model parameters are different may be replaced with another description. For example, the M model parameters correspond to different quantities of neural network layers, the M model parameters correspond to different neurons, the M model parameters correspond to different inputs/outputs, the M model parameters have different computing complexity, the M model parameters have different computing capability requirements, or the M model parameters have different storage capability requirements.

In a possible implementation of the fourth aspect, the model parameter includes at least one of a weight of a model, an activation function of the model, and an offset of the model.

Based on the foregoing technical solution, the M model parameters transmitted on the resources configured by using the M pieces of configuration information include at least one of the foregoing, to increase flexibility of implementing the solution.

In a possible implementation of the fourth aspect, any one of the M pieces of configuration information includes at least one of the following:

indication information indicating a parameter size of a model parameter configured by using the one piece of configuration information;
indication information indicating a receive power of a transmission resource configured by using the one piece of configuration information;

indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

Based on the foregoing technical solution, the first node can determine, in the M pieces of configuration information based on the local information, the second configuration information corresponding to the local information, so that the first node can obtain, based on the second configuration information, the model parameter corresponding to the local information.

In a possible implementation of the fourth aspect, the method further includes: The second node sends third information, where the third information indicates K pieces of configuration information, the K pieces of configuration information are used to configure transmission resources of K model parameters, parameter sizes of the K model parameters are different, and K is an integer greater than 1.

Based on the foregoing technical solution, the second node may further send the third information indicating the K pieces of configuration information, so that the first node can receive, based on third configuration information in the K pieces of configuration information, a third model parameter whose parameter size is the same as (or similar to) the local parameter size. In other words, different first nodes may send, by using the third information, a model parameter whose parameter size is the same as (or similar to) a parameter size of the respective local information, so that a receiver of the model parameter can perform AI processing (for example, parameter fusion processing) on model parameters sent by the different first nodes.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the fourth aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

Based on the foregoing technical solution, any one of the K pieces of configuration information indicated by the third information may include at least one of the foregoing, to increase flexibility of implementing the solution.

In a possible implementation of the fourth aspect, before the second node sends the third information, the method further includes: The second node sends sixth information, where the sixth information indicates local information corresponding to each of the M model parameters, and/or the sixth information indicates whether the third information includes the M pieces of configuration information.

Based on the foregoing technical solution, the second node may further send the sixth information, to learn of related information of the M pieces of configuration information by using the sixth information, and determine, based on the learned information, whether to receive the M pieces of configuration information, to avoid unnecessary detection by the first node, thereby reducing overheads.

In a possible implementation of the fourth aspect, before the second node sends the second information, the method further includes: The second node sends seventh information, where the seventh information indicates local information corresponding to each of the K model parameters, and/or the seventh information indicates whether the second information includes the K pieces of configuration information.

Based on the foregoing technical solution, the second node may further send the seventh information, to learn of related information of the K pieces of configuration information by using the seventh information, and determine, based on the learned information, whether to receive the K pieces of configuration information, to avoid unnecessary detection by the first node, thereby reducing overheads.

According to a fifth aspect of this application, a communication method is provided. The method is performed by a first node, the method is performed by a part of components (for example, a processor, a chip, or a chip system) in the first node, or the method may be implemented by a logical module or software that can implement all or some functions of the first node. In the fifth aspect and possible implementations of the fifth aspect, an example in which the method is performed by the first node is used for description. In the method, the first node receives third information, where the third information indicates K pieces of configuration information, the K pieces of configuration information are used to configure transmission resources of K model parameters, parameter sizes of the K model parameters are different, and K is an integer greater than 1; and the first node sends a third model parameter based on third configuration information in the K pieces of configuration information, where a parameter size of the third model parameter and a local parameter size are the same (or similar, for example, a difference between the parameter size of the third model parameter and the local parameter size is less than a threshold).

Based on the foregoing technical solution, the third information received by the first node indicates the K pieces of configuration information, and the K pieces of configuration information are used to configure the resources of the K model parameters. Then, the first node sends the third model parameter based on a resource configured by using the third configuration information in the K pieces of configuration information, and the parameter size of the third model parameter is the same as (or similar to) the local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

In a possible implementation of the fifth aspect, the first node may determine the second configuration information in the M pieces of configuration information based on the local information.

Based on the foregoing technical solution, the local information may be implemented in a plurality of manners, to provide flexibility of implementing the solution.

It should be understood that the local resource overhead level may be understood as utilization of a local computing resource, utilization of a local storage resource, usage of local power consumption, or the like. For example, the local computing resource may include a resource of a module/component such as a central processing unit (central processor unit, CPU), a micro controller unit (micro controller unit, MCU), or a graphics processing unit (graphics processing unit, GPU). The local storage resource may include a resource of a module/component such as a read-only memory (read-only memory, ROM) or a random access memory (random access memory, RAM). The usage of the local power consumption may include a health status of a battery module, a current used power (or power percentage) of the battery module, a current unused power (or power percentage) of the battery module, and the like.

It should be understood that the local AI capability information may include local AI-related capability information, for example, an AI-related computing capability and storage capability. Similarly, the AI-related computing capability may include a computing capability of the module/component such as the CPU, the MCU, or the GPU, and the AI-related storage capability may include a storage capability of the module/component such as the ROM or the RAM.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the fifth aspect, the model parameter includes at least one of a weight of a model, an activation function of the model, and an offset of the model.

Based on the foregoing technical solution, the K model parameters transmitted on the resources configured by using the K pieces of configuration information include at least one of the foregoing, to increase flexibility of implementing the solution.

In a possible implementation of the fifth aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

Based on the foregoing technical solution, the first node can determine, in the K pieces of configuration information based on the local information, the third configuration information corresponding to the local information, so that the first node can send, based on the third configuration information, the model parameter corresponding to the local information.

In a possible implementation of the fifth aspect, before the first node receives the second information, the method further includes: The first node receives seventh information, where the seventh information indicates local information corresponding to each of the K model parameters, and/or the seventh information indicates whether the second information includes the K pieces of configuration information.

Based on the foregoing technical solution, the first node may further receive the seventh information, to learn of related information of the K pieces of configuration information by using the seventh information, and determine, based on the learned information, whether to receive the K pieces of configuration information, to avoid unnecessary detection by the first node, thereby reducing overheads.

According to a sixth aspect of this application, a communication method is provided. The method is performed by a second node, the method is performed by a part of components (for example, a processor, a chip, or a chip system) in the second node, or the method may be implemented by a logical module or software that can implement all or some functions of the second node. In the sixth aspect and possible implementations of the sixth aspect, an example in which the method is performed by the second node is used for description. In the method, the second node determines third information, where the third information indicates K pieces of configuration information, the K pieces of configuration information are used to configure transmission resources of K model parameters, parameter sizes of the K model parameters are different, and K is an integer greater than 1; and the second node sends the third information.

Based on the foregoing technical solution, the third information sent by the second node indicates the K pieces of configuration information, and the K pieces of configuration information are used to configure the resources of the K model parameters. Then, after the first node receives the third information, the first node sends a third model parameter based on a resource configured by using second configuration information in the K pieces of configuration information, and a parameter size of the third model parameter is the same as (or similar to) a local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation of the sixth aspect, the model parameter includes at least one of a weight of a model, an activation function of the model, and an offset of the model.

Based on the foregoing technical solution, the K model parameters transmitted on the resources configured by using the K pieces of configuration information include at least one of the foregoing, to increase flexibility of implementing the solution.

In a possible implementation of the sixth aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

Based on the foregoing technical solution, the first node can determine, in the K pieces of configuration information based on the local information, the third configuration information corresponding to the local information, so that the first node can send, based on the third configuration information, the model parameter corresponding to the local information.

In a possible implementation of the sixth aspect, before the second node sends the second information, the method further includes: The second node sends seventh information, where the seventh information indicates local information corresponding to each of the K model parameters, and/or the seventh information indicates whether the second information includes the K pieces of configuration information.

Based on the foregoing technical solution, the second node may further send the seventh information, to learn of related information of the K pieces of configuration information by using the seventh information, and determine, based on the learned information, whether to receive the K pieces of configuration information, to avoid unnecessary detection by the first node, thereby reducing overheads.

According to a seventh aspect of this application, a communication apparatus is provided. The apparatus is a first node, the apparatus is a part of components (for example, a processor, a chip, or a chip system) in the first node, or the apparatus may be a logical module or software that can implement all or some functions of the first node. In the seventh aspect and possible implementations of the seventh aspect, an example in which the communication apparatus is the first node is used for description. The first node may be a terminal device or a network device.

The apparatus includes a processing unit and a transceiver unit. The transceiver unit is configured to receive first information, where the first information indicates N pieces of configuration information, the N pieces of configuration information are used to configure resources of N model parameters, and N is a positive integer. The processing unit is configured to determine first configuration information in the N pieces of configuration information. The transceiver unit is further configured to receive a first model parameter based on the first configuration information, where the first model parameter is used to determine a first neural network model corresponding to local information.

In a possible implementation of the seventh aspect, the local information includes at least one of a local resource overhead level, local AI capability information, and a local parameter size.

In a possible implementation of the seventh aspect, the model parameter includes at least one of a weight of a model, an activation function of the model, and an offset of the model.

In a possible implementation of the seventh aspect, N is an integer greater than 1, parameter sizes of the N model parameters are different, and the processing unit is further configured to determine the first configuration information in the N pieces of configuration information based on the local information.

In a possible implementation of the seventh aspect, a value of N is 1, the first model parameter is used to configure a neural network model shared by at least two first nodes, and the processing unit is further configured to perform, based on the local information, knowledge distillation processing on the neural network model shared by the at least two first nodes, to obtain the first neural network model.

In a possible implementation of the seventh aspect, the transceiver unit is further configured to receive second information, where the second information indicates M pieces of configuration information, the M pieces of configuration information are used to configure transmission resources of M model parameters, parameter sizes of the M model parameters are different, and M is an integer greater than 1. The processing unit is further configured to determine second configuration information in the M pieces of configuration information. The transceiver unit is further configured to receive a second model parameter based on the second configuration information, where a parameter size of the second model parameter is the same as (or similar to) the local parameter size.

In a possible implementation of the seventh aspect, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation of the seventh aspect, the transceiver unit is further configured to receive third information, where the third information indicates K pieces of configuration information, the K pieces of configuration information are used to configure transmission resources of K model parameters, parameter sizes of the K model parameters are different, and K is an integer greater than 1. The processing unit is further configured to determine third configuration information in the K pieces of configuration information. The transceiver unit is further configured to send a third model parameter based on the third configuration information, where a parameter size of the third model parameter is the same as (or similar to) the local parameter size.

In a possible implementation of the seventh aspect, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

In a possible implementation of the seventh aspect, the transceiver unit is further configured to receive fourth information, where the fourth information indicates a resource for carrying request information, and the request information is used to request the N pieces of configuration information. The transceiver unit is further configured to send the request information on the resource for carrying the request information.

In a possible implementation of the seventh aspect, the request information includes a first orthogonal sequence, and the first orthogonal sequence corresponds to the local information.

In a possible implementation of the seventh aspect, the transceiver unit is further configured to receive fifth information, where the fifth information indicates local information corresponding to each of the N model parameters, and/or the fifth information indicates whether the first information includes the N pieces of configuration information.

In the seventh aspect of this application, a constituent module of the communication apparatus may be further configured to perform the steps performed in the possible implementations of the first aspect, and achieve corresponding technical effects. For details, refer to the first aspect. Details are not described herein again.

According to an eighth aspect of this application, a communication apparatus is provided. The apparatus is a second node, the apparatus is a part of components (for example, a processor, a chip, or a chip system) in the second node, or the apparatus may be a logical module or software that can implement all or some functions of the second node. In the eighth aspect and possible implementations of the eighth aspect, an example in which the communication apparatus is the second node is used for description. The second node may be a terminal device or a network device.

The apparatus includes a processing unit and a transceiver unit. The processing unit is configured to determine first information, where the first information indicates N pieces of configuration information, the N pieces of configuration information are used to configure resources of N model parameters, N is a positive integer, and one of the N model parameters is used to determine a neural network model corresponding to local information of a first node. The transceiver unit is configured to send the first information.

In a possible implementation of the eighth aspect, the local information includes at least one of a local resource overhead level, local AI capability information, and a local parameter size.

In a possible implementation of the eighth aspect, the model parameter includes at least one of a weight of a model, an activation function of the model, and an offset of the model.

In a possible implementation of the eighth aspect, N is an integer greater than 1, and parameter sizes of the N model parameters are different.

In a possible implementation of the eighth aspect, a value of N is 1.

In a possible implementation of the eighth aspect, the transceiver unit is further configured to send second information, where the second information indicates M pieces of configuration information, the M pieces of configuration information are used to configure transmission resources of M model parameters, parameter sizes of the M model parameters are different, and M is an integer greater than 1. The transceiver unit is further configured to send a part or all of the M model parameters based on the M pieces of configuration information.

In a possible implementation of the eighth aspect, any one of the M pieces of configuration information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

In a possible implementation of the eighth aspect, the transceiver unit is further configured to send third information, where the third information indicates K pieces of configuration information, the K pieces of configuration information are used to configure transmission resources of K model parameters, parameter sizes of the K model parameters are different, and K is an integer greater than 1. The transceiver unit is further configured to receive a part or all of the K model parameters based on the K pieces of configuration information.

In a possible implementation of the eighth aspect, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In a possible implementation of the eighth aspect, the transceiver unit is further configured to send fourth information, where the fourth information indicates a resource for carrying request information, and the request information is used to request the N pieces of configuration information. The transceiver unit is further configured to receive the request information on the resource for carrying the request information.

In a possible implementation of the eighth aspect, the request information includes a first orthogonal sequence, and the first orthogonal sequence corresponds to the local information.

In a possible implementation of the eighth aspect, the transceiver unit is further configured to send fifth information, where the fifth information indicates local information corresponding to each of the N model parameters, and/or the fifth information indicates whether the first information includes the N pieces of configuration information.

In the eighth aspect of this application, a constituent module of the communication apparatus may be further configured to perform the steps performed in the possible implementations of the second aspect, and achieve corresponding technical effects. For details, refer to the second aspect. Details are not described herein again.

According to a ninth aspect of this application, a communication apparatus is provided. The apparatus is a first node, the apparatus is a part of components (for example, a processor, a chip, or a chip system) in the first node, or the apparatus may be a logical module or software that can implement all or some functions of the first node. In the ninth aspect and possible implementations of the ninth aspect, an example in which the communication apparatus is the first node is used for description. The first node may be a terminal device or a network device.

The apparatus includes a processing unit and a transceiver unit. The transceiver unit is configured to receive second information, where the second information indicates M pieces of configuration information, the M pieces of configuration information are used to configure transmission resources of M model parameters, parameter sizes of the M model parameters are different, and M is an integer greater than 1. The processing unit is configured to determine second configuration information in the M pieces of configuration information. The transceiver unit is further configured to receive a second model parameter based on the second configuration information, where a parameter size of the second model parameter is the same as (or similar to) a local parameter size.

In a possible implementation of the ninth aspect, the local information includes at least one of a local resource overhead level, local AI capability information, and a local parameter size.

In a possible implementation of the ninth aspect, the model parameter includes at least one of a weight of a model, an activation function of the model, and an offset of the model.

In a possible implementation of the ninth aspect, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation of the ninth aspect, the transceiver unit is further configured to receive third information, where the third information indicates K pieces of configuration information, the K pieces of configuration information are used to configure transmission resources of K model parameters, parameter sizes of the K model parameters are different, and K is an integer greater than 1. The transceiver unit is further configured to send a third model parameter based on third configuration information in the K pieces of configuration information, where a parameter size of the third model parameter is the same as (or similar to) the local parameter size.

In a possible implementation of the ninth aspect, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

In the ninth aspect of this application, a constituent module of the communication apparatus may be further configured to perform the steps performed in the possible implementations of the third aspect, and achieve corresponding technical effects. For details, refer to the third aspect. Details are not described herein again.

According to a tenth aspect of this application, a communication apparatus is provided. The apparatus is a second node, the apparatus is a part of components (for example, a processor, a chip, or a chip system) in the second node, or the apparatus may be a logical module or software that can implement all or some functions of the second node. In the tenth aspect and possible implementation of the tenth aspect, an example in which the communication apparatus is the second node is used for description. The second node may be a terminal device or a network device.

The apparatus includes a processing unit and a transceiver unit. The processing unit is configured to determine second information, where the second information indicates M pieces of configuration information, the M pieces of configuration information are used to configure transmission resources of M model parameters, parameter sizes of the M model parameters are different, and M is an integer greater than 1. The transceiver unit is configured to send the second information.

In a possible implementation of the tenth aspect, the local information includes at least one of a local resource overhead level, local AI capability information, and a local parameter size.

In a possible implementation of the tenth aspect, the model parameter includes at least one of a weight of a model, an activation function of the model, and an offset of the model.

In a possible implementation of the tenth aspect, any one of the M pieces of configuration information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

In a possible implementation of the tenth aspect, the processing unit is further configured to determine third information, where the third information indicates K pieces of configuration information, the K pieces of configuration information are used to configure transmission resources of K model parameters, parameter sizes of the K model parameters are different, and K is an integer greater than 1.

In a possible implementation of the tenth aspect, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In the tenth aspect of this application, a component module of the communication apparatus may be further configured to perform the steps performed in the possible implementations of the fourth aspect, and achieve corresponding technical effects. For details, refer to the fourth aspect. Details are not described herein again.

According to an eleventh aspect of this application, a communication apparatus is provided. The apparatus is a first node, the apparatus is a part of components (for example, a processor, a chip, or a chip system) in the first node, or the apparatus may be a logical module or software that can implement all or some functions of the first node. In the eleventh aspect and possible implementation of the eleventh aspect, an example in which the communication apparatus is the first node is used for description. The first node may be a terminal device or a network device.

The apparatus includes a processing unit and a transceiver unit. The transceiver unit is configured to receive third information, where the third information indicates K pieces of configuration information, the K pieces of configuration information are used to configure transmission resources of K model parameters, parameter sizes of the K model parameters are different, and K is an integer greater than 1. The processing unit is configured to determine third configuration information in the K pieces of configuration information. The transceiver unit is further configured to send a third model parameter based on the third configuration information, where a parameter size of the third model parameter is the same as (or similar to) a local parameter size.

In a possible implementation of the eleventh aspect, the local information includes at least one of a local resource overhead level, local AI capability information, and a local parameter size.

In a possible implementation of the eleventh aspect, the model parameter includes at least one of a weight of a model, an activation function of the model, and an offset of the model.

In a possible implementation of the eleventh aspect, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In the eleventh aspect of this application, a constituent module of the communication apparatus may be further configured to perform the steps performed in the possible implementations of the fifth aspect, and achieve corresponding technical effects. For details, refer to the fifth aspect. Details are not described herein again.

According to a twelfth aspect of this application, a communication apparatus is provided. The apparatus is a second node, the apparatus is a part of components (for example, a processor, a chip, or a chip system) in the second node, or the apparatus may be a logical module or software that can implement all or some functions of the second node. In the twelfth aspect and possible implementation of the twelfth aspect, an example in which the communication apparatus is the second node is used for description. The second node may be a terminal device or a network device.

The apparatus includes a processing unit and a transceiver unit. The processing unit is configured to determine third information, where the third information indicates K pieces of configuration information, the K pieces of configuration information are used to configure transmission resources of K model parameters, parameter sizes of the K model parameters are different, and K is an integer greater than 1. The transceiver unit is configured to send the third information.

In a possible implementation of the twelfth aspect, the local information includes at least one of a local resource overhead level, local AI capability information, and a local parameter size.

In a possible implementation of the twelfth aspect, the model parameter includes at least one of a weight of a model, an activation function of the model, and an offset of the model.

In a possible implementation of the twelfth aspect, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In the twelfth aspect of this application, a constituent module of the communication apparatus may be further configured to perform the steps performed in the possible implementations of the sixth aspect, and achieve corresponding technical effects. For details, refer to the sixth aspect. Details are not described herein again.

According to a thirteenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the first aspect or the possible implementations of the first aspect.

According to a fourteenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the second aspect or the possible implementations of the second aspect.

According to a fifteenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the third aspect or the possible implementations of the third aspect.

According to a sixteenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the fourth aspect or the possible implementations of the fourth aspect.

According to a seventeenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the fifth aspect or the possible implementations of the fifth aspect.

According to an eighteenth aspect of embodiments of this application, a communication apparatus is provided, including at least one processor. The at least one processor is coupled to a memory, the memory is configured to store a program or instructions, and the at least one processor is configured to execute the program or the instructions, to enable the apparatus to implement the method in any one of the sixth aspect or the possible implementations of the sixth aspect.

According to a nineteenth aspect of embodiments of this application, a communication apparatus is provided, including at least one logic circuit and an input/output interface. The logic circuit is configured to perform the method in any one of the first aspect or the possible implementations of the first aspect.

According to a twentieth aspect of embodiments of this application, a communication apparatus is provided, including at least one logic circuit and an input/output interface. The logic circuit is configured to perform the method in any one of the second aspect or the possible implementations of the second aspect.

According to a twenty-first aspect of embodiments of this application, a communication apparatus is provided, including at least one logic circuit and an input/output interface. The logic circuit is configured to perform the method in any one of the third aspect or the possible implementations of the third aspect.

According to a twenty-second aspect of embodiments of this application, a communication apparatus is provided, including at least one logic circuit and an input/output interface. The logic circuit is configured to perform the method in any one of the fourth aspect or the possible implementations of the fourth aspect.

According to a twenty-third aspect of embodiments of this application, a communication apparatus is provided, including at least one logic circuit and an input/output interface. The logic circuit is configured to perform the method in any one of the fifth aspect or the possible implementations of the fifth aspect.

According to a twenty-fourth aspect of embodiments of this application, a communication apparatus is provided, including at least one logic circuit and an input/output interface. The logic circuit is configured to perform the method in any one of the sixth aspect or the possible implementations of the sixth aspect.

According to a twenty-fifth aspect of embodiments of this application, a computer-readable storage medium is provided. The storage medium is configured to store one or more computer-executable instructions. When the computer-executable instructions are executed by a processor, the processor performs the method in any one of the possible implementations of any one of the first aspect to the sixth aspect.

According to a twenty-sixth aspect of embodiments of this application, a computer program product (also referred to as a computer program) is provided. When the computer program product is executed by a processor, the processor performs the method in any one of the possible implementations of any one of the first aspect to the sixth aspect.

According to a twenty-seventh aspect of embodiments of this application, a chip system is provided. The chip system includes at least one processor, configured to support a communication apparatus in implementing a function in any one of the possible implementations of any one of the first aspect to the sixth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

According to a twenty-eighth aspect of embodiments of this application, a communication system is provided. The communication system includes the communication apparatus in the seventh aspect and the communication apparatus in the eighth aspect, and/or the communication system includes the communication apparatus in the ninth aspect and the communication apparatus in the tenth aspect, and/or the communication system includes the communication apparatus in the eleventh aspect and the communication apparatus in the twelfth aspect, and/or the communication system includes the communication apparatus in the thirteenth aspect and the communication apparatus in the fourteenth aspect, and/or the communication system includes the communication apparatus in the fifteenth aspect and the communication apparatus in the sixteenth aspect, and/or the communication system includes the communication apparatus in the seventeenth aspect and the communication apparatus in the eighteenth aspect, and/or the communication system includes the communication apparatus in the nineteenth aspect and the communication apparatus in the twentieth aspect, and/or the communication system includes the communication apparatus in the twenty-first aspect and the communication apparatus in the twenty-second aspect, and/or the communication system includes the communication apparatus in the twenty-third aspect and the communication apparatus in the twenty-fourth aspect.

For technical effects brought by any design scheme in the seventh aspect to the twenty-eighth aspect, refer to the technical effects brought by different design schemes in the first aspect to the sixth aspect. Details are not described herein again.

## BRIEF DESCRIPTION OF DRAWINGS

FIG. 1a is a diagram of a communication system according to this application;

FIG. 1b is another diagram of a communication system according to this application;

FIG. 1c is another diagram of a communication system according to this application;

FIG. 1d is a diagram of an AI processing process according to this application;

FIG. 1e is another diagram of an AI processing process according to this application;

FIG. 2a is another diagram of an AI processing process according to this application;

FIG. 2b is another diagram of an AI processing process according to this application;

FIG. 2c is another diagram of an AI processing process according to this application;

FIG. 2d is another diagram of an AI processing process according to this application;

FIG. 3 is a diagram of interaction in a communication method according to this application;

FIG. 4a is another diagram of an AI processing process according to this application;

FIG. 4b is another diagram of an AI processing process according to this application;

FIG. 4c is another diagram of an AI processing process according to this application;

FIG. 5 is another diagram of interaction in a communication method according to this application;

FIG. 6 is another diagram of interaction in a communication method according to this application;

FIG. 7 is another diagram of an AI processing process according to this application;

FIG. 8 is a diagram of a communication apparatus according to this application;

FIG. 9 is another diagram of a communication apparatus according to this application;

FIG. 10 is another diagram of a communication apparatus according to this application;

FIG. 11 is another diagram of a communication apparatus according to this application; and

FIG. 12 is another diagram of a communication apparatus according to this application.

## DESCRIPTION OF EMBODIMENTS

First, some terms in embodiments of this application are described for ease of understanding by a person skilled in the art.

(1) Terminal device: The terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device such as a mobile telephone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an Internet of things (internet of things, IoT) device.

In embodiments of this application, the terminal device may further obtain an AI service provided by a network device. Optionally, the terminal device may further have an AI processing capability.

(2) Network device: The network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in the 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (centralized unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes collaborate to assist the terminal in implementing wireless access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

Table 1

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computing capability node, a RAN node having an AI capability, or a core network element having an AI capability on a network side (an access network or a core network).

In embodiments of this application, an apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used to describe the technical solutions provided in embodiments of this application.

(3) Configuration and pre-configuration: In this application, both the configuration and the pre-configuration are used. The configuration means that a network device/server sends configuration information of some parameters or values of parameters to a terminal by using a message or signaling, so that the terminal determines, based on the values or the information, a communication parameter or a resource used for transmission. Similar to the configuration, the pre-configuration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

In this application, for same or similar parts of embodiments, mutual reference may be made between embodiments, unless otherwise specified. In embodiments of this application and the methods/designs/implementations in embodiments, unless otherwise specified or a logical conflict occurs, terms and/or descriptions are consistent and may be mutually referenced between different embodiments and between the methods/designs/implementations in embodiments, and technical features in the different embodiments and the methods/designs/implementations in embodiments may be combined to form a new embodiment, method, or implementation based on an internal logical relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

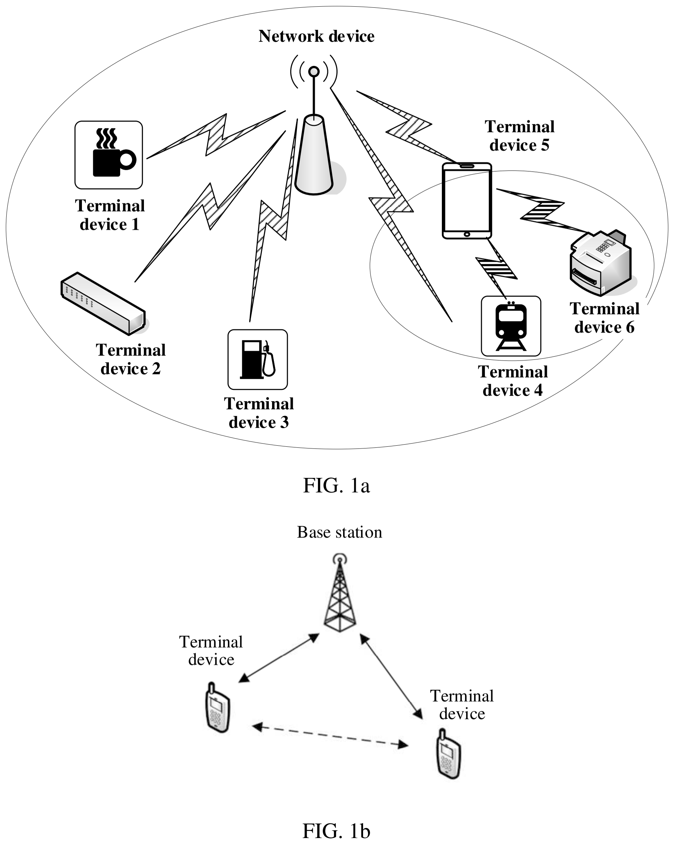

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6 respectively. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an Internet of vehicles system, the terminal device 5 separately sends AI configuration information to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

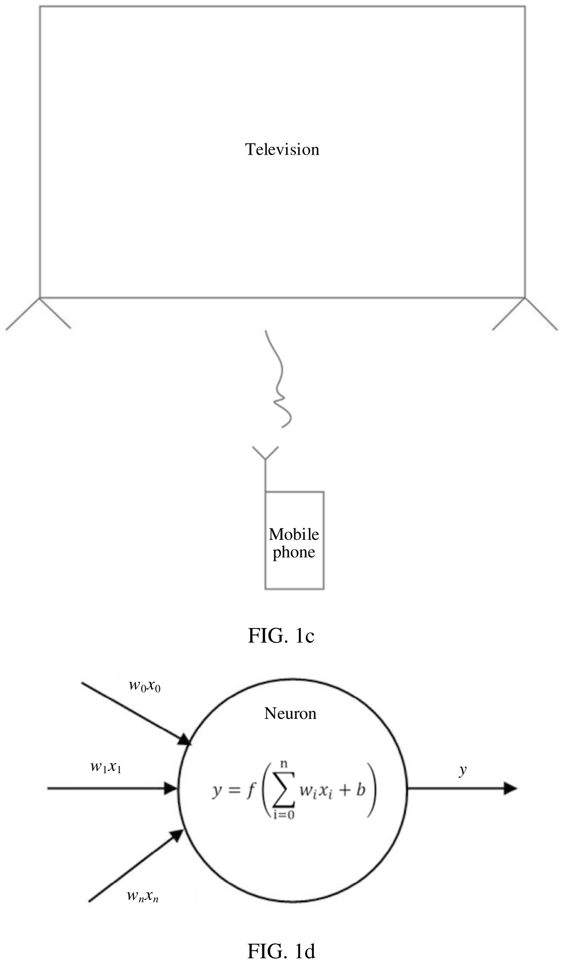

The communication system shown in FIG. 1a is used as an example. In addition to a communication-related business, an AI-related business may be performed between different devices (including between network devices, between a network device and a terminal device, and/or between terminal devices). For example, as shown in FIG. 1b, an example in which a network device is a base station is used. A communication-related business and an AI-related business may be performed between the base station and one or more terminal devices, and the communication-related business and the AI-related business may also be performed between different terminal devices. For another example, as shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in the communication system. For example, the AI network element may be an AI module built in the access network device, the core network device, a cloud server, or an operation, administration and maintenance (operation, administration and maintenance, OAM), to implement an AI-related function. The OAM may serve as an operation, administration and maintenance of the core network device and/or as an operation, administration and maintenance of the access network device. Alternatively, the AI network element may be an independently disposed network element in the communication system. Optionally, the terminal or the chip built in the terminal may alternatively include the AI entity, configured to implement the AI-related function.

The following briefly describes artificial intelligence (artificial intelligence, AI) that may be used in this application.

The artificial intelligence (artificial intelligence, AI) can enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. A learning task may be classified into a classification task and a regression task based on a type of a label.

In terms of unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

The idea of the neural network comes from a neuron structure of brain tissue. For example, each neuron performs a weighted summation operation on input values of the neuron, and outputs an operation result through an activation function. FIG. 1d is a diagram of a neuron structure. It is assumed that an input of a neuron is x = $[x_0, x_1, \dots, x_n]$, and a weight corresponding to each input is respectively w = $[w, w_1, \dots, w_n]$, where n is a positive integer, $w_i$ and $x_i$ may be various possible types such as a decimal, an integer (for example, 0, a positive integer, or a negative integer), or a complex number. $w_i$ is used as a weight of $x_i$, and is used to weight $x_i$. A bias for performing weighted summation on the input values based on the weights is, for example, b. There may be a plurality of forms of the activation function. Assuming that an activation function of a neuron is y = $f(z)$ = max (0, z), an output of the neuron is

$$y = f\left(\sum_{i=0}^{i=n} w_i * x_i + b\right) = \max\left(0, \sum_{i=0}^{i=n} w_i * x_i + b\right)$$ . For another example, an activation function of a neuron is

$y = f(z) = z$, and an output of the neuron is $f\left(\sum_{i=0}^{i=n} w_i * x_i + b\right) = \sum_{i=0}^{i=n} w_i * x_i + b$ . $b$ may be various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may refer to a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

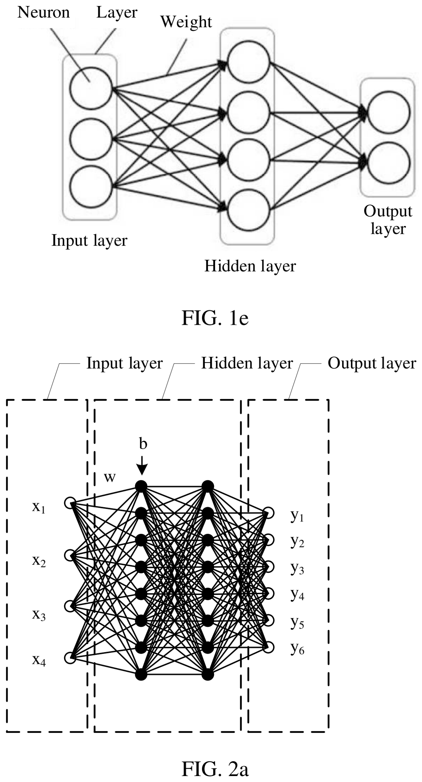

A feature of the FNN network is that neurons at adjacent layers are completely connected to each other. Due to this feature, the FNN usually needs a large amount of storage space, resulting in high computing complexity. FIG. 1e is a diagram of an FNN network.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: A part of or all parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (also referred to as model inference, inference, prediction, or the like), model monitoring or model verification, inference result release, or the like. The AI function may also be referred to as an AI (-related) operation or an AI-related function.

The following describes an example of an implementation process of a neural network with reference to the accompanying drawings.

1. Fully-connected neural network

The fully-connected neural network is also referred to as a multilayer perceptron (multilayer perceptron, MLP). As shown in FIG. 2a, one MLP includes one input layer (left side), one output layer (right side), and a plurality of hidden layers (middle). Each layer of the MLP includes several nodes, which are referred to as neurons. Neurons at two neighboring layers are connected to each other in pairs.

Optionally, in consideration of neurons at two neighboring layers, an output h of a neuron at a lower layer is a weighted sum of all neurons x at an upper layer connected to the neuron at the lower layer, and may be expressed, by using an activation function, as:

$$h = f(wx + b)$$

w is a weight matrix, b is a bias vector, and f is the activation function.

Further, optionally, the output of the neural network may be recursively expressed as:

$$y = f_n(w_n f_{n-1}(\ldots) + b_n)$$

n is an index of the neural network layer, $1 \le n \le N$, and N is a total quantity of layers of the neural network.

In other words, the neural network may be understood as a mapping relationship from an input data set to an output data set. The neural network is usually initialized randomly, and a process of obtaining the mapping relationship from random w and b by using existing data is referred to as training of the neural network.

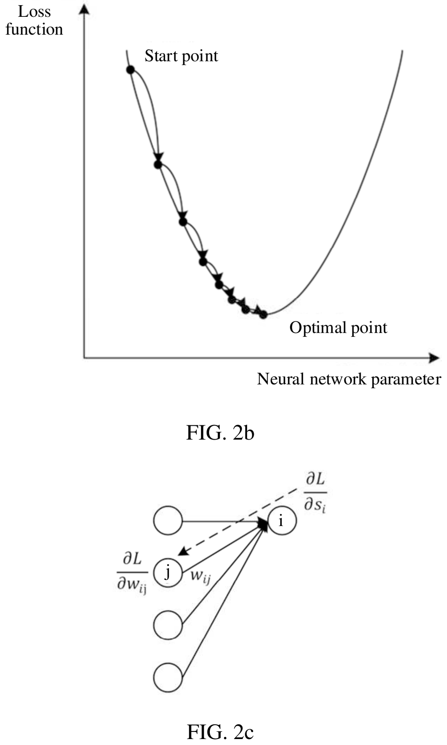

Optionally, a specific training manner is to evaluate an output result of the neural network by using a loss function (loss function). As shown in FIG. 2b, an error may be back-propagated, and a neural network parameter (including w and b) can be iteratively optimized by using a gradient descent method until the loss function reaches a minimum value, that is, "a better point (for example, an optimal point)" in FIG. 2b. It may be understood that the neural network parameter corresponding to "the better point (for example, the optimal point)" in FIG. 2b may be used as a neural network parameter in trained AI model information.

Further optionally, a gradient descent process may be expressed as:

$$\boldsymbol{\theta} \leftarrow \boldsymbol{\theta} - \eta \frac{\partial L}{\partial \boldsymbol{\theta}}$$

$\theta$ is a to-be-optimized parameter (including w and b), L is the loss function, $\eta$ is a learning rate for controlling a gradient descent step, $\partial$ represents a derivative operation, and $\frac{\partial L}{\partial \theta}$ represents the derivative of $L$ with respect to $\theta$.

Further, optionally, a backpropagation process uses a chain method for obtaining a bias. As shown in FIG. 2c, a gradient of a parameter at a previous layer may be obtained by recursive calculation of a gradient of a parameter at a next layer, and may be expressed as:

$$\frac{\partial L}{\partial w_{ij}} = \frac{\partial L}{\partial s_i} \frac{\partial s_i}{\partial w_{ij}}$$

$w_{ij}$ is a weight of a connection between a node i and a node j, and $s_i$ is an input weighted sum on the node i.

2. Federated learning (Federated Learning, FL)

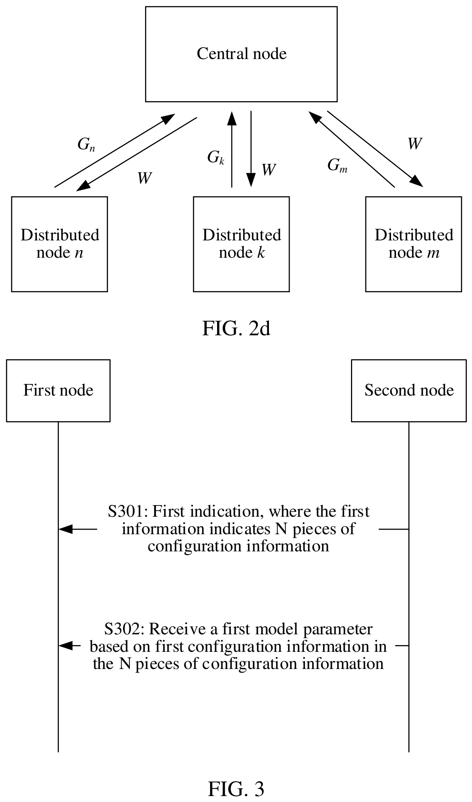

A concept of the federated learning is proposed to effectively resolve difficulties faced by the current development of artificial intelligence. While ensuring user data privacy and security, the federated learning facilitates various edge devices and a server at a central end to collaborate to efficiently complete a learning task of a model. As shown in FIG. 2d, an FL architecture is a currently most widely used training architecture in the FL field. A FedAvg algorithm is a basic algorithm of FL. An algorithm procedure of the FedAvg algorithm is roughly as follows:

(1) The central end initializes a to-be-trained model $w_g^0$ and broadcasts and sends the model to all client devices.

(2) In a $(t \in [1, T])$th round, a client $k \in [1, K]$ performs $E$ times of epoch training on a received global model $w_g^{t-1}$ based on a local dataset $\mathcal{D}_k$ to obtain a local training result $w_k^t$, and reports the local training result to a central node.

(3) The central node summarizes and collects local training results from all (or some) clients. It is assumed that a set of clients that upload a local model in a $t$th round is $\mathcal{S}^t$. The central end performs weighted averaging by using a quantity of samples of a corresponding client as a weight to obtain a new global model, and a specific update rule is

$$w_g^t = \sum_{k \in \mathcal{S}^t} \frac{D_k w_k^t}{\sum_{k \in \mathcal{S}^t} D_k}.$$

Then, the central end broadcasts and sends a global model $w_g^t$ of a latest version to all client devices for a new round of training.

(4) Steps (2) and (3) are repeated until the model converges finally or a quantity of training rounds reaches an upper limit.

In addition to reporting the local model $w_k^t$, a trained local gradient $g_k^t$ may also be reported. The central node averages the local gradient, and updates the global model based on a direction of the average gradient.

It can be learned that in the FL architecture, a dataset exists on a distributed node, that is, the distributed node collects a local dataset, performs local training, and reports a local result (a model or a gradient) obtained through training to the central node. The central node does not have a dataset, is only responsible for fusing training results of distributed nodes to obtain a global model, and delivers the global model to the distributed nodes.

3. Knowledge distillation.

A typical method for heterogeneous model fusion is to convert models of different structures into models of a same structure in a knowledge distillation manner, and then perform fusion. The knowledge distillation means that knowledge is transferred from one network to another network, and the two networks may be homogeneous or heterogeneous. The knowledge distillation may be used to convert a network from a large network into a small network (for example, a parameter size of the large network is greater than a parameter size of the small network), and retain performance close to that of the large network; or knowledge learned by a plurality of networks may be transferred to one network. A specific method of heterogeneous fusion is as follows: The central node first collects heterogeneous models of the distributed nodes, distills the heterogeneous models into homogeneous models, and fuses the homogeneous models. Then, fused homogeneous models are fed back to the distributed nodes. The distributed nodes restore the fused homogeneous models to network structures of the distributed nodes, and start a next round of fusion.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example. The computing capability of the network device is mainly to provide computing capability support for a signal receiving and sending capability (for example, perform computing on a time domain resource, a frequency domain resource, and the like for carrying a signal), to implement a communication task between the network device and another communication node.

However, in a communication network, in addition to providing computing capability support for the foregoing communication task by using the computing capability of the communication node, the communication node may further have a surplus computing capability. Therefore, how to use these computing capabilities is an urgent technical problem to be resolved.

In an implementation example, to cope with the vision of intelligence and inclusiveness in the future, intelligence may further evolve at a wireless network architecture level. In a future communication system, AI may be further integrated deeply with a wireless network, to implement network-inherent intelligence and also include terminal intelligence. For example, integration of AI and a wireless network may be applied to the following new requirements and new scenarios: For example, terminal connections are more flexible and intelligent, including but not limited to diversified terminal types, the super Internet of things (Super IoT) (for example, the super IoT may include the Internet of things, the Internet of vehicles, the industry, and health care), massive connections, more flexible terminal connections, and terminals having a specific AI capability. Another example is network-inherent intelligence. In addition to a conventional communication connection service, the network will further provide computing and AI services to better support inclusive, real-time, and highly secure AI services. These new requirements and new scenarios may bring changes to a wireless network architecture and a communication mode.

Generally, nodes participating in AI learning may include nodes in a plurality of distributed communication networks, for example, a terminal device and a network device. For example, in the network architecture in which there is a central node shown in FIG. 2d, the central node may be a network device or a terminal device, and any distributed node may also be a network device or a terminal device. In an AI learning process, different nodes may participate in AI learning based on randomized neural network models. To be specific, after each node obtains a randomized model parameter, each node may locally perform initialization processing on the neural network model based on the randomized model parameter to obtain an initialized neural network model, and perform an AI learning process based on the initialized neural network model, until an AI neural network model converges to a preset condition (for example, a loss function of the neural network model in FIG. 2b indicates that the model converges to a better point (for example, an optimal point); and for another example, a quantity of iterations of the neural network model reaches a threshold).

However, local information of different nodes may be different. For example, one or more of computing resources (for example, a resource of a module/component such as a CPU or a GPU) of different nodes, storage resources (for example, a resource of a module/component such as a ROM or a RAM) of different nodes, and utilization of local computing resources of different nodes may be different. Therefore, in the foregoing process in which each node performs AI learning based on the randomized model parameter, the initialized neural network model obtained by each node is randomized. This may cause a slow convergence speed of the AI neural network model, and further affect AI learning processing efficiency.

To resolve the foregoing problem, this application provides a communication method and a related device, so that a computing capability of a communication node can be applied to artificial intelligence (artificial intelligence, AI) learning, and implementation flexibility of different nodes can be increased.

FIG. 3 is a diagram of an implementation of a communication method according to this application. The method includes the following steps.

It should be noted that in FIG. 3, the method is illustrated by using an example in which a first node and a second node are used as execution bodies of interaction illustration. However, the execution bodies of the interaction illustration are not limited in this application. For example, in FIG. 3 and a corresponding implementation, S301 is performed by the first node, or may be performed by a chip, a chip system, or a processor that supports the first node in implementing the method, or may be a logical module or software that can implement all or some functions of the first node. The second node in S301 and S302 in FIG. 3 and a corresponding implementation may alternatively be replaced with a chip, a chip system, or a processor that supports the second node in implementing the method, or may be replaced with a logical module or software that can implement all or some functions of the second node.

S301: The second node sends first information, and correspondingly, the first node receives the first information. The first information indicates N pieces of configuration information, the N pieces of configuration information are used to configure resources of N model parameters, and N is a positive integer.

It should be noted that different first nodes may be distributed nodes, and the second node may be connected to one or more first nodes. The second node may serve as a central node (a control node, a management node, or the like) of the one or more first nodes; or the second node may serve as a server (server), and the one or more first nodes serve as clients (client).

It should be understood that, that the first information indicates the N pieces of configuration information may be understood as that the first information includes indexes of the N pieces of configuration information, so that a receiver of the first information can obtain the N pieces of configuration information based on the indexes; or the first information includes the N pieces of configuration information, so that a receiver of the first information can obtain the N pieces of configuration information from the first information. In addition, that the N pieces of configuration information are used to configure the resources of the N model parameters may be understood as that the N pieces of configuration information are used to configure the resources of the N model parameters respectively, or the N pieces of configuration information are in one-to-one correspondence with the resources of the N model parameters. In addition, the second node may send the N pieces of configuration information by using one or more pieces of information/messages. In other words, the N pieces of configuration information indicated by the first information may be completed in one sending process, or may be completed in a plurality of sending processes. Correspondingly, the first node may also receive the N pieces of configuration information in one receiving process, or may receive the N pieces of configuration information in a plurality of receiving processes.

Similarly, that second information mentioned below indicates M pieces of configuration information may be understood as that the second information includes indexes of the M pieces of configuration information, so that a receiver of the second information can obtain the M pieces of configuration information based on the indexes; or the second information includes the M pieces of configuration information, so that a receiver of the second information can obtain the M pieces of configuration information. In addition, that the M pieces of configuration information are used to configure resources of M model parameters may be understood as that the M pieces of configuration information are used to configure the resources of the M model parameters respectively, or the M pieces of configuration information are in one-to-one correspondence with the resources of the M model parameters. In addition, the second node may send the N pieces of configuration information by using one or more pieces of information/messages. In other words, the M pieces of configuration information indicated by the second information may be completed in one sending process, or may be completed in a plurality of sending processes. Correspondingly, the first node may also receive the M pieces of configuration information in one receiving process, or may receive the M pieces of configuration information in a plurality of receiving processes.

Similarly, that third information mentioned below indicates K pieces of configuration information may be understood as that the third information includes indexes of the K pieces of configuration information, so that a receiver of the third information can obtain the K pieces of configuration information based on the indexes; or the third information includes the K pieces of configuration information, so that a receiver of the third information can obtain the K pieces of configuration information. In addition, that the K pieces of configuration information are used to configure the resources of the K model parameters may be understood as that the K pieces of configuration information are used to configure the resources of the K model parameters respectively, or the K pieces of configuration information are in one-to-one correspondence with the resources of the K model parameters. In addition, the second node may send the N pieces of configuration information by using one or more pieces of information/messages. In other words, the K pieces of configuration information indicated by the third information may be completed in one sending process, or may be completed in a plurality of sending processes. Correspondingly, the first node may also receive the K pieces of configuration information in one receiving process, or may receive the K pieces of configuration information in a plurality of receiving processes.

In a possible implementation, in step S301, for any model parameter configured by using the N pieces of configuration information indicated by the first information sent by the second node, the model parameter includes at least one of a weight of a model, an activation function of the model, and an offset of the model. Therefore, the N model parameters transmitted on the resources configured by using the N pieces of configuration information include the at least one of the foregoing, to increase flexibility of implementing the solution.

S302: The first node receives a first model parameter based on first configuration information in the N pieces of configuration information, where the first model parameter is used to determine a first neural network model corresponding to local information.

Optionally, AI learning may be replaced with machine learning, AI processing, AI neural network processing, or the like.

It should be understood that the resources configured by using the N pieces of configuration information include one or more of a time domain resource, a frequency domain resource, and a space domain resource. In step S302, that the first node receives the first model parameter based on the first configuration information in the N pieces of configuration information may be understood as that the first node receives the first model parameter based on a resource configured by using the first configuration information in the N pieces of configuration information.

It should be understood that in step S301, in the N model parameters configured by using the N pieces of configuration information indicated by the first information, the model parameter is used to initialize a neural network model, or in other words, the model parameter includes an initialization parameter of a neural network model. The initialization parameter may be a parameter used to determine to use the neural network model, or the initialization parameter may be a parameter used to determine to start training of the neural network model. In other words, for the first node, after the first node receives the first model parameter based on the first configuration information in step S301, in step S302, the first node may perform initialization processing on the neural network model based on the first model parameter, to obtain the first neural network model corresponding to the local information; or in step S302, the first node may use the first model parameter as the initialization parameter of the neural network model, and obtain the first neural network model after completing local parameter initialization.

In a possible implementation, the first model parameter received by the first node in step S302 is used to determine the first neural network model corresponding to the local information, and the local information includes at least one of a local resource overhead level, local AI capability information, and a local parameter size. Therefore, the local information may be implemented in a plurality of manners, to provide flexibility of implementing the solution.

It should be understood that the local resource overhead level may be understood as utilization of a local computing resource, utilization of a local storage resource, usage of local power consumption, or the like. For example, the local computing resource may include a resource of a module/component such as a central processing unit (central processor unit, CPU), a micro controller unit (micro controller unit, MCU), or a graphics processing unit (graphics processing unit, GPU). The local storage resource may include a resource of a module/component such as a read-only memory (read-only memory, ROM) or a random access memory (random access memory, RAM). The usage of the local power consumption may include a health status of a battery module, a current used power (or power percentage) of the battery module, a current unused power (or power percentage) of the battery module, and the like.

It should be understood that the local AI capability information may include local AI-related capability information, for example, an AI-related computing capability and storage capability. Similarly, the AI-related computing capability may include a computing capability of the module/component such as the CPU, the MCU, or the GPU, and the AI-related storage capability may include a storage capability of the module/component such as the ROM or the RAM.

It should be understood that the local parameter size may be understood as a parameter size of a local neural network model of the first node, including but not limited to a quantity of neural network layers of the neural network model, a quantity of neurons of the neural network model, an input/output of the neural network model, or computing complexity of the neural network model varies.

It should be noted that the local information of the first node may be implemented in a plurality of manners. Correspondingly, for the first node, after the first node receives the first model parameter, the first node may determine, in a plurality of manners, the first neural network model corresponding to the local information.

In an implementation example, for example, the local information includes the local resource overhead level. The local resource overhead level may be reflected by CPU utilization. The first node may determine a mapping relationship between different CPU utilization and different neural network models in a configuration or pre-configuration manner. For example, different neural network models include a first-type neural network model and a second-type neural network model. The first-type neural network model may be more complex than the second-type neural network model (for example, a scale of a model parameter is larger, and a quantity of neural network layers of the model is larger). The mapping relationship may indicate that a node whose CPU utilization is 0 to X% (a value of X is greater than 0 and less than 100) corresponds to the first-type neural network model, and indicate that a node whose CPU utilization is X% to 100% corresponds to the second-type neural network model. Therefore, in the foregoing technical solution, the first node may compare local CPU utilization with X%. When the local CPU utilization is less than or equal to X%, the first neural network model obtained by the first node based on the first model parameter may be the first-type neural network model. When the local CPU utilization is greater than or equal to X%, the first neural network model obtained by the first node based on the first model parameter may be the second-type neural network model.

Optionally, in the foregoing implementation example, measurement on the CPU utilization may be determined on the premise that the node executes same or similar computing parameters, that is, the CPU utilization is determined in a relatively fair case. For example, for training of two models, when input parameters are the same, CPU utilization required by different nodes to complete a round of training is different. For example, when CPU utilization of a node is low, it may be understood as that a CPU of the node has a strong computing capability, and initialization processing may be performed based on a large model parameter size (or a complex model parameter). When CPU utilization of a node is high, it may be understood as that a CPU of the node has a weak computing capability, and initialization processing may be performed based on a small model parameter size (or a simplified model parameter). Correspondingly, based on the difference, different model parameters may be configured for the different nodes, so that each node can obtain a differentiated (or personalized) initialized neural network model.

In another implementation example, for example, the local information includes the local AI capability information. The local AI capability information may be reflected by using a storage capability of a RAM. The first node may determine a mapping relationship between different storage capabilities of RAMs and different neural network models in a configuration or pre-configuration manner. For example, different neural network models include a first-type neural network model, a second-type neural network model, and a third-type neural network model. The first-type neural network model may be more complex than the second-type neural network model (for example, a scale of a model parameter is larger, and a quantity of neural network layers of the model is larger), and the second-type neural network model may be more complex than the third-type neural network model. The mapping relationship may indicate that a node whose storage capability of the RAM is 0 to Y gigabytes (Gigabyte, GB) (a value of Y is greater than 0) corresponds to the first-type neural network model, indicate that a node whose storage capability of the RAM is greater than Y GB and less than or equal to Z GB (a value of Z is greater than that of Y) corresponds to the second-type neural network model, and indicate that a node whose storage capability of the RAM is greater than Z GB corresponds to the third-type neural network model. Therefore, in the foregoing technical solution, the first node may compare a local storage capability of a RAM with Y and Z. When the local storage capability of the RAM is less than or equal to Y GB, the first neural network model obtained by the first node based on the first model parameter may be the first-type neural network model. When the local storage capability of the RAM is greater than Y GB and less than or equal to Z GB, the first neural network model obtained by the first node based on the first model parameter may be the second-type neural network model. When the local storage capability of the RAM is greater than Z GB, the first neural network model obtained by the first node based on the first model parameter may be the third-type neural network model.

In a possible implementation, in step S301, parameter sizes of the N model parameters configured by using the N pieces of configuration information indicated by the first information sent by the second node are different, and N is greater than 1. Before step S302, the method further includes: The first node determines the first configuration information in the N pieces of configuration information based on the local information. Specifically, when the N pieces of configuration information indicated by the first information is greater than 1, the parameter sizes of the N model parameters configured by using the N pieces of configuration information are different, so that the first node can determine, in the N pieces of configuration information based on the local information, the first configuration information corresponding to the local information, and the first node can obtain, based on the first configuration information, the model parameter corresponding to the local information.

It should be understood that, that the parameter sizes of the N model parameters are different may be understood as that the N model parameters have different requirements for the local information of the node. For example, the local information includes the local resource overhead level. A model parameter with a large parameter size in the N model parameters requires the local resource overhead level to be lower than a threshold, so that more unused resources are provided to process the model parameter with the large parameter size. For another example, the local information includes the local AI capability information. A model parameter with a large parameter size in the N model parameters requires the local AI capability information to be greater than a threshold, so that more AI resources are provided to process the model parameter with the large parameter size.

Optionally, that the parameter sizes of the N model parameters are different may be replaced with another description. For example, the N model parameters correspond to different quantities of neural network layers, the N model parameters correspond to different neurons, the N model parameters correspond to different inputs/outputs, the N model parameters have different computing complexity, the N model parameters have different computing capability requirements, or the N model parameters have different storage capability requirements.

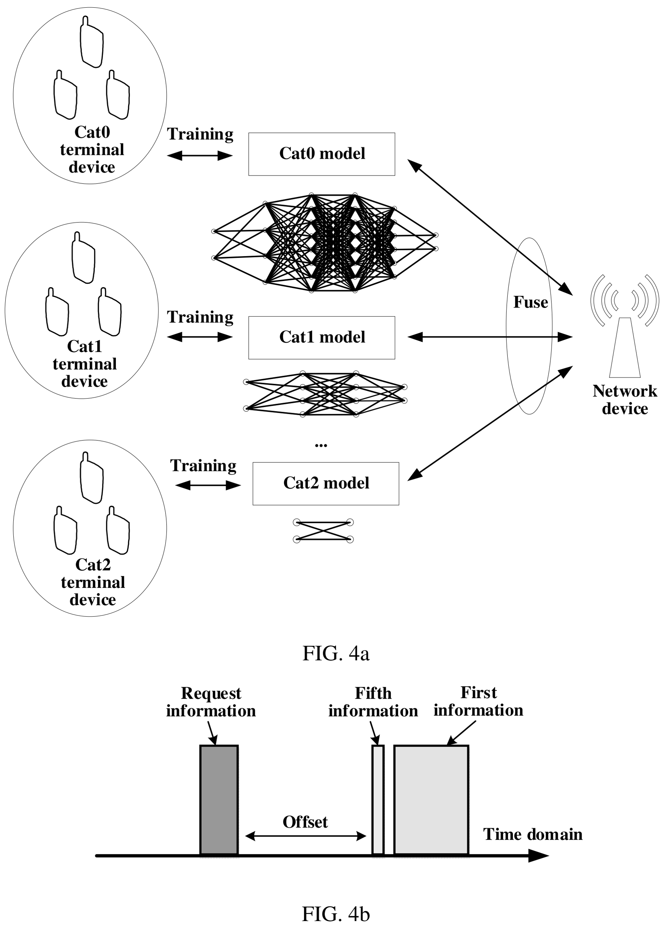

In an implementation example, an example in which the second node is a network device and the first node is a terminal device is used. The N model parameters may include three model parameters in FIG. 4a. The three model parameters may be used for initialization processing of three categories of models respectively in FIG. 4a. The three categories of models are a cat0 model (CatO Model), a cat1 model (Cat1 Model), and a cat2 model (Cat2 Model) in FIG. 4a. It can be learned from the example shown in FIG. 4a that different models have different quantities of neural network layers. Therefore, the terminal device may receive one of the N model parameters based on a locally deployed model. For example, a terminal device deployed with the cat0 model (that is, a cat0 terminal device in the figure) may receive a model parameter of the cat0 model, a terminal device deployed with the cat1 model (that is, a cat1 terminal device in the figure) may receive a model parameter of the cat1 model, and a terminal device deployed with the cat2 model (that is, a cat2 terminal device in the figure) may receive a model parameter of the cat2 model, so that each terminal device can receive a model parameter that matches local information, and further perform initialization processing based on the received model parameter, to obtain an initialized neural network model that may be used for subsequent AI learning (for example, model training (Training)).

In a possible implementation, in step S301, the N pieces of configuration information indicated by the first information sent by the second node are one piece of configuration information (that is, the first configuration information, and a value of N is 1). The first model parameter is used to configure a neural network model shared by at least two first nodes. After step S302, the method further includes: The first node performs, based on the local information, knowledge distillation processing on the neural network model shared by the at least two first nodes, to obtain the first neural network model. Specifically, when the N pieces of configuration information indicated by the first information is one piece of configuration information (that is, the first configuration information), the first model parameter configured by using the first configuration information is used to configure the neural network model shared by the at least two first nodes, so that the at least two first nodes can obtain the shared neural network model based on the first configuration information, and perform knowledge distillation processing on the shared neural network model based on respective local information, to obtain the first neural network model corresponding to the local information.

It should be understood that the neural network model shared by the at least two first nodes may be understood as a neural network model that can be identified/processed by the at least two first nodes. Alternatively, the neural network model shared by the at least two first nodes may be described as a neural network model commonly used by the at least two first nodes or a neural network model that can be identified/processed by the at least two first nodes.

In a possible implementation, before the first node receives the first information in step S301, the method further includes: The first node receives fourth information, where the fourth information indicates a resource for carrying request information, and the request information is used to request the N pieces of configuration information. The first node sends the request information on the resource for carrying the request information. Specifically, the first node may further receive the fourth information indicating the resource for carrying the request information, where the request information is used to request the N pieces of configuration information, so that the first node can obtain the N pieces of configuration information by using the first information after sending the request information based on the resource indicated by the fourth information.

Optionally, the request information includes a first orthogonal sequence, and the first orthogonal sequence corresponds to the local information.

Optionally, the first orthogonal sequence is included in P orthogonal sequences, and the P orthogonal sequences respectively correspond to different local information. In other words, different first nodes can determine one orthogonal sequence in the P orthogonal sequences based on the respective local information, and send the orthogonal sequence to the second node, so that a receiver (for example, the second node) of the request information can learn of the local information of each first node based on the received request information.

Optionally, when P is greater than 1, different sequences may be in an orthogonal relationship, that is, the P sequences may be described as P orthogonal sequences, so that the P orthogonal sequences can also be identified by the receiver when being transmitted on a same resource. In another implementation, the P sequences may alternatively be identified by the receiver in another manner, for example, by staggering a frequency domain resource and a time domain resource. In other words, the P orthogonal sequences may be replaced with P sequences, and the first orthogonal sequence may be replaced with a first sequence.

In addition, when the second node serves as the receiver of the request information, the second node can determine the local information of each first node based on the one or more received orthogonal sequences, and may use the local information of each first node as a basis for determining at least one of the N pieces of configuration information, the M pieces of configuration information, and the K pieces of configuration information, so that each piece of configuration information sent by the second node can adapt to the local information of each first node.

In addition, because different first nodes can indicate local parameter sizes of the first nodes by using the request information, overheads can be reduced.

Optionally, in addition to determining, based on the fourth information, the resource for carrying the first orthogonal sequence, the first node may alternatively determine, in another manner (for example, a pre-configuration manner), the resource for carrying the first orthogonal sequence. This is not limited herein.

Optionally, a value of P may be greater than or equal to a value of N. For example, the first node may learn of, in a configuration or pre-configuration manner, different parameter sizes respectively corresponding to the P orthogonal sequences, and the second node may determine the parameter size of each first node by receiving request information from one or more first nodes. Correspondingly, the second node may further generate the N pieces of configuration information based on the determined parameter size of each first node. Generally, the P orthogonal sequences may be set redundantly (that is, P is greater than or equal to N), so that each first node can indicate the local parameter size of the first node by using the request information.

In a possible implementation, before the first node receives the first information, the method further includes: The first node receives fifth information, where the fifth information indicates local information corresponding to each of the N model parameters, and/or the fifth information indicates whether the first information includes the N pieces of configuration information. Specifically, the first node may further receive the fifth information, to learn of related information of the N pieces of configuration information by using the fifth information, and determine, based on the learned information, whether to receive the N pieces of configuration information, to avoid unnecessary detection by the first node, thereby reducing overheads.

In an implementation example, the request information, the fifth information, and the first information may be carried on different time domain resources. As shown in FIG. 4b, a plurality of first nodes may send request information on a time domain resource on which the request information is located, so that the second node can obtain a local parameter size of each first node. Then, the second node may send, in the fifth information, related information of the N pieces of configuration information indicated by the first information, so that the first node determines, based on the fifth information, whether to receive the N pieces of configuration information, to avoid unnecessary detection by the first node, thereby reducing overheads.

In a possible implementation, in the method shown in FIG. 3, the method further includes: The first node receives second information, where the second information indicates M pieces of configuration information, the M pieces of configuration information are used to configure transmission resources of M model parameters, parameter sizes of the M model parameters are different, and M is an integer greater than 1. The first node receives a second model parameter based on second configuration information in the M pieces of configuration information, where a parameter size of the second model parameter and the local parameter size are the same (or similar, for example, a difference between the parameter size of the second model parameter and the local parameter size is less than a threshold). Specifically, the first node may further receive the second information indicating the M pieces of configuration information, and receive, based on the second configuration information in the M pieces of configuration information, the second model parameter whose parameter size is the same as (or similar to) the local parameter size. In other words, different first nodes may receive, by using the second information, a model parameter whose parameter size is the same as (or similar to) a parameter size of the respective local information, and perform AI processing (for example, local training) based on the received model parameter.

It should be understood that the transmission resources configured by using the M pieces of configuration information are used by different first nodes to receive one of the M model parameters, so that the different first nodes can subsequently perform AI processing (for example, local training) based on the received model parameter. Correspondingly, the M model parameters may be understood as global model parameters of a plurality of first nodes, that is, the M model parameters may be replaced with M global model parameters.

Optionally, any one of the M model parameters may include a gradient, a weight, and/or the like. For example, the gradient and/or the weight are/is used for further processing of an initialized neural network model (for example, the first neural network model described above), for example, training of the neural network model, and updating of the neural network model.

Similarly, that the parameter sizes of the M model parameters are different may be replaced with another description. For example, the M model parameters correspond to different quantities of neural network layers, the M model parameters correspond to different neurons, the M model parameters correspond to different inputs/outputs, the M model parameters have different computing complexity, the M model parameters have different computing capability requirements, or the M model parameters have different storage capability requirements.

In a possible implementation, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

Specifically, any one of the M pieces of configuration information indicated by the second information may include at least one of the foregoing, to increase flexibility of implementing the solution.

Optionally, any one of the N pieces of configuration information indicated by the first information received by the first node in step S301 may also include at least one of the following, to increase flexibility of implementing the solution. The at least one of the following includes:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation, before the first node receives the second information, the method further includes: The first node receives sixth information, where the sixth information indicates local information corresponding to each of the M model parameters, and/or the sixth information indicates whether the third information includes the M pieces of configuration information. Specifically, the first node may further receive the sixth information, to learn of related information of the M pieces of configuration information by using the sixth information, and determine, based on the learned information, whether to receive the M pieces of configuration information, to avoid unnecessary detection by the first node, thereby reducing overheads.

In a possible implementation, in the method shown in FIG. 3, the method further includes: The first node receives third information, where the third information indicates K pieces of configuration information, the K pieces of configuration information are used to configure transmission resources of K model parameters, parameter sizes of the K model parameters are different, and K is an integer greater than 1. The first node sends a third model parameter based on third configuration information in the K pieces of configuration information, where a parameter size of the third model parameter and the local parameter size are the same (or similar, for example, a difference between the parameter size of the third model parameter and the local parameter size is less than a threshold). Specifically, the first node may further receive the third information indicating the K pieces of configuration information, and receive, based on the third configuration information in the K pieces of configuration information, the third model parameter whose parameter size is the same as (or similar to) the local parameter size. In other words, different first nodes may send, by using the third information, a model parameter whose parameter size is the same as (or similar to) a parameter size of the respective local information, so that a receiver of the model parameter can perform AI processing (for example, parameter fusion processing) on model parameters sent by the different first nodes.

It should be understood that the transmission resources configured by using the K pieces of configuration information are used by different first nodes to send one of the K model parameters, so that a receiver of the model parameter can perform a fusion operation on model parameters sent by the different first nodes. Correspondingly, the K model parameters may be understood as local model parameters of a plurality of first nodes, that is, the K model parameters may be replaced with K local model parameters.

Optionally, any one of the K model parameters may include a gradient, a weight, and/or the like. For example, the gradient and/or the weight are/is used for further fusion processing of the neural network model, for example, deep fusion (Deep Fusion) or weighted averaging fusion (Weighted Averaging).

Similarly, that the parameter sizes of the K model parameters are different may be replaced with another description. For example, the K model parameters correspond to different quantities of neural network layers, the K model parameters correspond to different neurons, the K model parameters correspond to different inputs/outputs, the K model parameters have different computing complexity, the K model parameters have different computing capability requirements, or the K model parameters have different storage capability requirements.

In a possible implementation, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

It should be understood that, when the any one piece of configuration information includes the indication information indicating the index of the transmission resource of the one piece of configuration information in the transmission resources configured by using the K pieces of configuration information, it may be understood as that the second node configures a transmission resource set (including at least one of a time domain resource, a frequency domain resource, and a space domain resource) for the K pieces of configuration information, so that the first node can determine the corresponding transmission resource in the transmission resource set based on the index in the indication information.

Specifically, any one of the K pieces of configuration information indicated by the third information may include at least one of the foregoing, to increase flexibility of implementing the solution.

In a possible implementation, before the first node receives the third information, the method further includes: The first node receives seventh information, where the seventh information indicates local information corresponding to each of the K model parameters, and/or the seventh information indicates whether the second information includes the K pieces of configuration information. Specifically, the first node may further receive the seventh information, to learn of related information of the K pieces of configuration information by using the seventh information, and determine, based on the learned information, whether to receive the K pieces of configuration information, to avoid unnecessary detection by the first node, thereby reducing overheads.

Optionally, values of N, M, and K may be different from each other, or at least two values may be the same, or three values may be the same. This is not limited herein.

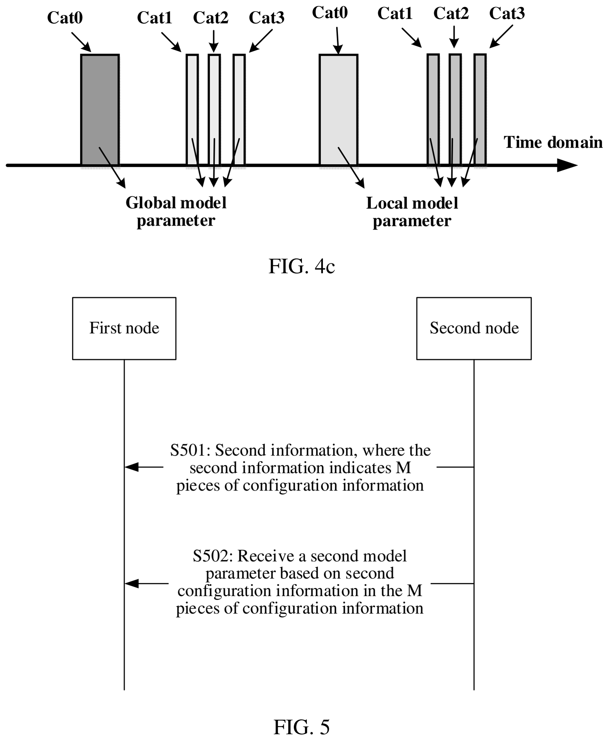

In an implementation example, an example in which the resources configured by using the M pieces of configuration information are used to transmit M global model parameters, and the resources configured by using the K pieces of configuration information are used to transmit N local model parameters is used. As shown in FIG. 4c, when values of M and K are both 4, in time domain, a first node of cat0, a first node of cat1, a first node of cat2, and a first node of cat3 may separately receive one of M global model parameters on a corresponding time domain resource, so that each first node locally performs AI processing (for example, AI training processing) based on the global model parameter. Then, in time domain, the first node of cat0, the first node of cat1, the first node of cat2, and the first node of cat3 may separately send one of K local model parameters on a corresponding time domain resource, so that the second node performs AI processing (for example, AI fusion processing) based on each received local model parameter.

Based on the technical solution shown in FIG. 3, the first information received by the first node in step S301 indicates the N pieces of configuration information, and the N pieces of configuration information are used to configure the resources of the N model parameters. Then, the first node receives, in step S302, the first model parameter based on the resource configured by using the first configuration information in the N pieces of configuration information, and the first node may determine, based on the first model parameter, the first neural network model corresponding to the local information. In other words, different first nodes may obtain, based on the first information, neural network models corresponding to respective local information, and may subsequently participate in AI learning based on the locally obtained neural network models. Compared with an implementation in which different nodes participate in AI learning based on randomized neural network models, in the foregoing technical solution, different nodes may participate in AI learning based on the neural network models corresponding to the respective local information. Therefore, when a communication node in a communication system serves as a node participating in AI learning, a computing capability of the communication node can be applied to an AI task in a learning system, and implementation flexibility of different nodes can be increased.

In addition, local information of different nodes is usually different. In the foregoing technical solution, the first node can determine, based on the first information, the neural network model corresponding to the local information. Therefore, different first nodes can participate in AI learning based on the neural network models that adapt to the local information, to improve processing efficiency of the neural network model.

FIG. 5 is a diagram of another implementation of a communication method according to this application. The method includes the following steps.

It should be noted that in FIG. 5, the method is illustrated by using an example in which a first node and a second node are used as execution bodies of interaction illustration. However, the execution bodies of the interaction illustration are not limited in this application. For example, in FIG. 5 and a corresponding implementation, S501 is performed by the first node, or may be performed by a chip, a chip system, or a processor that supports the first node in implementing the method, or may be a logical module or software that can implement all or some functions of the first node. The second node in S501 and S502 in FIG. 5 and a corresponding implementation may alternatively be replaced with a chip, a chip system, or a processor that supports the second node in implementing the method, or may be replaced with a logical module or software that can implement all or some functions of the second node.

S501: The second node sends second information, and correspondingly, the first node receives the second information. The second information indicates M pieces of configuration information, the M pieces of configuration information are used to configure transmission resources of M model parameters, parameter sizes of the M model parameters are different, and M is an integer greater than 1.

S502: The first node receives a second model parameter based on second configuration information in the M pieces of configuration information. A parameter size of the second model parameter and a local parameter size are the same (or similar, for example, a difference between the parameter size of the second model parameter and the local parameter size is less than a threshold).

Based on the technical solution shown in FIG. 5, the second information received by the first node in step S501 indicates the M pieces of configuration information, and the M pieces of configuration information are used to configure the resources of the M model parameters. Then, in step S502, the first node receives the second model parameter based on a resource configured by using the second configuration information in the M pieces of configuration information, and the parameter size of the second model parameter is the same as (or similar to) the local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

It should be noted that for the technical solution shown in FIG. 5, refer to the descriptions of FIG. 3 and the related embodiment. Corresponding technical effects are implemented, for example, local information, a model parameter, M pieces of configuration information, third information, K pieces of configuration information, sixth information, and seventh information.

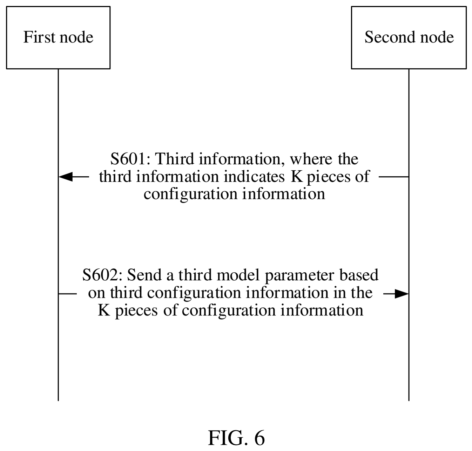

FIG. 6 is a diagram of another implementation of a communication method according to this application. The method includes the following steps.

It should be noted that in FIG. 6, the method is illustrated by using an example in which a first node and a second node are used as execution bodies of interaction illustration. However, the execution bodies of the interaction illustration are not limited in this application. For example, in FIG. 6 and a corresponding implementation, S601 is performed by the first node, or may be performed by a chip, a chip system, or a processor that supports the first node in implementing the method, or may be a logical module or software that can implement all or some functions of the first node. The second node in S601 and S602 in FIG. 6 and a corresponding implementation may alternatively be replaced with a chip, a chip system, or a processor that supports the second node in implementing the method, or may be replaced with a logical module or software that can implement all or some functions of the second node.

S601: The second node sends third information, and correspondingly, the first node receives the third information. The third information indicates K pieces of configuration information, the K pieces of configuration information are used to configure transmission resources of K model parameters, parameter sizes of the K model parameters are different, and K is an integer greater than 1.

S602: The first node sends a third model parameter based on third configuration information in the K pieces of configuration information, where a parameter size of the third model parameter and a local parameter size are the same (or similar, for example, a difference between the parameter size of the third model parameter and the local parameter size is less than a threshold).

Based on the technical solution shown in FIG. 6, the third information received by the first node in step S601 indicates the K pieces of configuration information, and the K pieces of configuration information are used to configure the resources of the K model parameters. Then, in step S602, the first node sends the third model parameter based on a resource configured by using the third configuration information in the K pieces of configuration information, and the parameter size of the third model parameter is the same as (or similar to) the local parameter size. In other words, different first nodes may obtain, based on the first information, a model parameter whose parameter size is the same as (or similar to) the local parameter size, and may subsequently participate in AI learning based on the model parameter whose parameter size is the same as (or similar to) the local parameter size. Compared with an implementation in which different nodes participate in AI learning based on randomized model parameters, in the foregoing technical solution, different nodes may participate in AI learning based on the model parameter whose parameter size is the same as (or similar to) the local parameter size. Therefore, when a communication node in a communication system serves as a node participating in AI learning, a computing capability of the communication node can be applied to an AI task in a learning system, and implementation flexibility of different nodes can be increased.

In addition, local parameter sizes of different nodes may be different. In the foregoing technical solution, the first node can participate in AI learning based on the model parameter whose parameter size is the same as (or similar to) the local parameter size. Therefore, different first nodes can participate in AI learning based on the model parameter that adapts to local information, to improve processing efficiency of a neural network model.

It should be noted that for the technical solution shown in FIG. 6, refer to the descriptions of FIG. 3 and the related embodiment. Corresponding technical effects are implemented, for example, local information, a model parameter, third information, K pieces of configuration information, and seventh information.

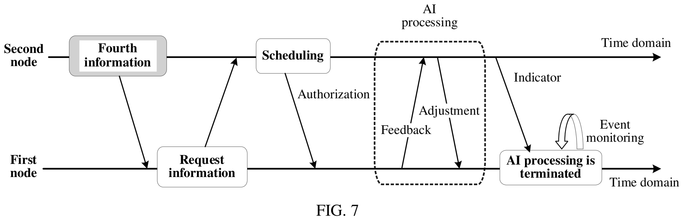

In an implementation example of the technical solutions shown in FIG. 3 to FIG. 6, as shown in FIG. 7, related steps may be performed between the second node and the first node by using a time domain flow direction shown in FIG. 7.

In an implementation example, the second node may send, to the first node in a scheduling (Scheduling) resource grant (Grant) manner, the first information in the technical solution shown in FIG. 3, so that the first node obtains a model parameter based on the N pieces of configuration information indicated by the first information, performs an initialization process based on the model parameter to obtain the first neural network model, and subsequently may perform an AI processing process (for example, AI training processing of the first node and AI fusion processing of the second node) based on the first neural network model.

Optionally, before the second node schedules the first information, the second node may further send fourth information to the first node, so that the first node sends request information based on a resource configured by using the fourth information. The request information may be used to trigger the second node to schedule resources indicated by the N pieces of configuration information.

In another implementation example, the second node may send, to the first node in a scheduling (Scheduling) resource grant (Grant) manner, the second information in the technical solution shown in FIG. 3/FIG. 5/FIG. 6, so that the first node receives a global model parameter based on the M pieces of configuration information indicated by the second information, and performs an AI processing process (for example, AI training processing of the first node and AI fusion processing of the second node) based on the global model parameter.

In another implementation example, the second node may send, to the first node in a scheduling (Scheduling) resource grant (Grant) manner, the third information in the technical solution shown in FIG. 3/FIG. 5/FIG. 6, so that the first node sends a local model parameter based on the K pieces of configuration information indicated by the third information, and performs an AI processing process (for example, AI training processing of the first node and AI fusion processing of the second node) based on the global model parameter.

Optionally, in the AI processing process, the first node may feed back (Feedback) a local AI processing result to the second node. Correspondingly, the second node may also adjust (Adjustment), to the first node, related information (for example, a model gradient/model weight) of AI processing.

Optionally, after the AI processing process, the second node may further send an indicator (indicator), where the indicator indicates that AI processing is terminated (terminated). In other words, for the first node, the first node may determine, in an event monitoring (Event monitoring) manner after detecting the indicator, that AI processing is terminated.

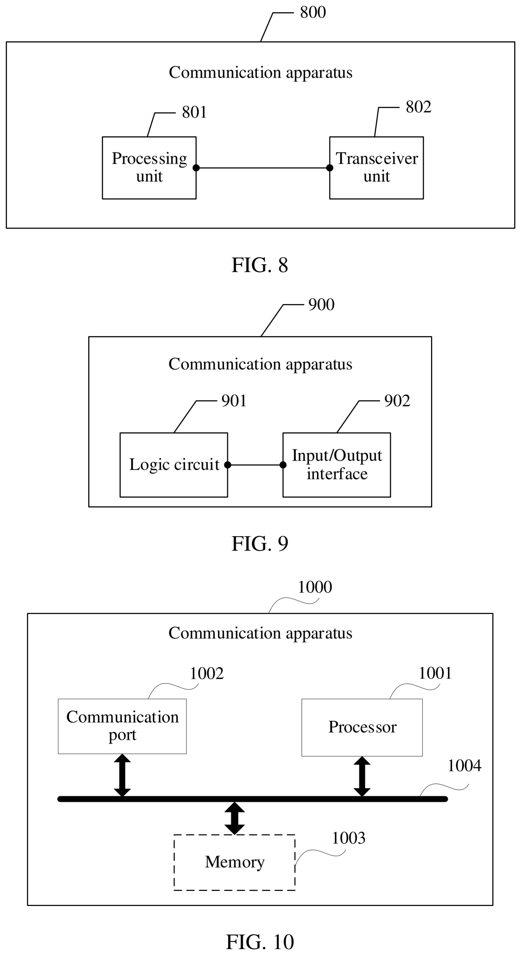

Refer to FIG. 8. An embodiment of this application provides a communication apparatus 800. The communication apparatus 800 may implement a function of the first node or the second node (where the first node or the second node is a terminal device or a network device) in the foregoing method embodiments, and therefore can also implement the beneficial effects of the foregoing method embodiments. In this embodiment of this application, the communication apparatus 800 may be a first node (or a second node), or may be an integrated circuit, an element, or the like in the first node (or the second node), for example, a chip. In the following embodiments, an example in which the communication apparatus 800 is a first node (or a second node) is used for description.

It should be noted that the transceiver unit 802 may include a sending unit and a receiving unit, which are respectively configured to perform sending and receiving.

In a possible implementation, when the apparatus 800 is configured to perform the method performed by the first node in any one of the foregoing embodiments, the apparatus 800 includes a processing unit 801 and a transceiver unit 802. The transceiver unit 802 is configured to receive first information, where the first information indicates N pieces of configuration information, the N pieces of configuration information are used to configure resources of N model parameters, and N is a positive integer. The processing unit 801 is configured to determine first configuration information in the N pieces of configuration information. The transceiver unit 802 is further configured to receive a first model parameter based on the first configuration information, where the first model parameter is used to determine a first neural network model corresponding to local information.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, N is an integer greater than 1, parameter sizes of the N model parameters are different, and the processing unit 801 is further configured to determine the first configuration information in the N pieces of configuration information based on the local information.

In a possible implementation, a value of N is 1, the first model parameter is used to configure a neural network model shared by at least two first nodes, and the processing unit 801 is further configured to perform, based on the local information, knowledge distillation processing on the neural network model shared by the at least two first nodes, to obtain the first neural network model.

In a possible implementation, the transceiver unit 802 is further configured to receive second information, where the second information indicates M pieces of configuration information, the M pieces of configuration information are used to configure transmission resources of M model parameters, parameter sizes of the M model parameters are different, and M is an integer greater than 1. The processing unit 801 is further configured to determine second configuration information in the M pieces of configuration information. The transceiver unit 802 is further configured to receive a second model parameter based on the second configuration information, where a parameter size of the second model parameter is the same as (or similar to) the local parameter size.

In a possible implementation, any one of the M pieces of configuration information includes at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information; and
indication information indicating a time domain resource of the transmission resource configured by using the one piece of configuration information.

In a possible implementation, the transceiver unit 802 is further configured to receive third information, where the third information indicates K pieces of configuration information, the K pieces of configuration information are used to configure transmission resources of K model parameters, parameter sizes of the K model parameters are different, and K is an integer greater than 1. The processing unit 801 is further configured to determine third configuration information in the K pieces of configuration information. The transceiver unit 802 is further configured to send a third model parameter based on the third configuration information, where a parameter size of the third model parameter is the same as (or similar to) the local parameter size.

In a possible implementation, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and

indication information indicating an index of the transmission resource of the one piece of configuration information in the transmission resources configured by using the K pieces of configuration information.

In a possible implementation, the transceiver unit 802 is further configured to receive fourth information, where the fourth information indicates a resource for carrying request information, and the request information is used to request the N pieces of configuration information. The transceiver unit 802 is further configured to send the request information on the resource for carrying the request information.

In a possible implementation, the request information includes a first orthogonal sequence, and the first orthogonal sequence corresponds to the local information.

In a possible implementation, the transceiver unit 802 is further configured to receive fifth information, where the fifth information indicates local information corresponding to each of the N model parameters, and/or the fifth information indicates whether the first information includes the N pieces of configuration information.

In a possible implementation, when the apparatus 800 is configured to perform the method performed by the second node in any one of the foregoing embodiments, the apparatus 800 includes a processing unit 801 and a transceiver unit 802. The processing unit 801 is configured to determine first information, where the first information indicates N pieces of configuration information, the N pieces of configuration information are used to configure resources of N model parameters, N is a positive integer, and one of the N model parameters is used to determine a neural network model corresponding to local information of a first node. The transceiver unit 802 is configured to send the first information.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, N is an integer greater than 1, and parameter sizes of the N model parameters are different.

In a possible implementation, a value of N is 1.

In a possible implementation, the transceiver unit 802 is further configured to send second information, where the second information indicates M pieces of configuration information, the M pieces of configuration information are used to configure transmission resources of M model parameters, parameter sizes of the M model parameters are different, and M is an integer greater than 1. The transceiver unit 802 is further configured to send a part or all of the M model parameters based on the M pieces of configuration information.

In a possible implementation, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation, the transceiver unit 802 is further configured to send third information, where the third information indicates K pieces of configuration information, the K pieces of configuration information are used to configure transmission resources of K model parameters, parameter sizes of the K model parameters are different, and K is an integer greater than 1. The transceiver unit 802 is further configured to receive a part or all of the K model parameters based on the K pieces of configuration information.

In a possible implementation, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In a possible implementation, the transceiver unit 802 is further configured to send fourth information, where the fourth information indicates a resource for carrying request information, and the request information is used to request the N pieces of configuration information. The transceiver unit 802 is further configured to receive the request information on the resource for carrying the request information.

In a possible implementation, the request information includes a first orthogonal sequence, and the first orthogonal sequence corresponds to the local information.

In a possible implementation, the transceiver unit 802 is further configured to send fifth information, where the fifth information indicates local information corresponding to each of the N model parameters, and/or the fifth information indicates whether the first information includes the N pieces of configuration information.

In a possible implementation, when the apparatus 800 is configured to perform the method performed by the first node in any one of the foregoing embodiments, the apparatus 800 includes a processing unit 801 and a transceiver unit 802. The transceiver unit 802 is configured to receive second information, where the second information indicates M pieces of configuration information, the M pieces of configuration information are used to configure transmission resources of M model parameters, parameter sizes of the M model parameters are different, and M is an integer greater than 1. The processing unit 801 is configured to determine second configuration information in the M pieces of configuration information. The transceiver unit 802 is further configured to receive a second model parameter based on the second configuration information, where a parameter size of the second model parameter is the same as (or similar to) a local parameter size.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation, the transceiver unit 802 is further configured to receive third information, where the third information indicates K pieces of configuration information, the K pieces of configuration information are used to configure transmission resources of K model parameters, parameter sizes of the K model parameters are different, and K is an integer greater than 1. The transceiver unit 802 is further configured to send a third model parameter based on third configuration information in the K pieces of configuration information, where a parameter size of the third model parameter is the same as (or similar to) the local parameter size.

In a possible implementation, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In a possible implementation, when the apparatus 800 is configured to perform the method performed by the second node in any one of the foregoing embodiments, the apparatus 800 includes a processing unit 801 and a transceiver unit 802. The processing unit 801 is configured to determine second information, where the second information indicates M pieces of configuration information, the M pieces of configuration information are used to configure transmission resources of M model parameters, parameter sizes of the M model parameters are different, and M is an integer greater than 1. The transceiver unit 802 is configured to send the second information.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, any one of the M pieces of configuration information includes at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information; and

indication information indicating a time domain resource of the transmission resource configured by using the one piece of configuration information.

In a possible implementation, the processing unit 801 is further configured to determine third information, where the third information indicates K pieces of configuration information, the K pieces of configuration information are used to configure transmission resources of K model parameters, parameter sizes of the K model parameters are different, and K is an integer greater than 1.

In a possible implementation, any one of the K pieces of configuration information includes at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, where the parameter type includes a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

In a possible implementation, when the apparatus 800 is configured to perform the method performed by the first node in any one of the foregoing embodiments, the apparatus 800 includes a processing unit 801 and a transceiver unit 802. The transceiver unit 802 is configured to receive third information, where the third information indicates K pieces of configuration information, the K pieces of configuration information are used to configure transmission resources of K model parameters, parameter sizes of the K model parameters are different, and K is an integer greater than 1. The processing unit 801 is configured to determine third configuration information in the K pieces of configuration information.

The transceiver unit 802 is further configured to send a third model parameter based on the third configuration information, where a parameter size of the third model parameter is the same as (or similar to) a local parameter size.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

In a possible implementation, when the apparatus 800 is configured to perform the method performed by the second node in any one of the foregoing embodiments, the apparatus 800 includes a processing unit 801 and a transceiver unit 802. The processing unit 801 is configured to determine third information, where the third information indicates K pieces of configuration information, the K pieces of configuration information are used to configure transmission resources of K model parameters, parameter sizes of the K model parameters are different, and K is an integer greater than 1. The transceiver unit 802 is configured to send the third information.

In a possible implementation, the local information includes at least one of a local resource overhead level, local AI capability information, and a local parameter size.

In a possible implementation, the model parameter includes at least one of a weight of a model, an activation function of the model, and an offset of the model.

In a possible implementation, any one of the K pieces of configuration information includes at least one of the following:

indication information indicating a parameter size of a model parameter configured by using the one piece of configuration information;
indication information indicating a transmit power of a transmission resource configured by using the one piece of configuration information;
indication information indicating a parameter type of the model parameter configured by using the one piece of configuration information, where the parameter type includes a gradient and/or a weight;
indication information indicating a frequency domain resource of the transmission resource configured by using the one piece of configuration information;
indication information indicating a time domain resource of the transmission resource configured by using the one piece of configuration information; and
indication information indicating an index of the transmission resource of the one piece of configuration information in the transmission resources configured by using the K pieces of configuration information.

It should be noted that for details of content such as an information execution process of the unit of the communication apparatus 800, refer to the descriptions in the foregoing method embodiments of this application. Details are not described herein again.

FIG. 9 is another diagram of a structure of a communication apparatus 900 according to this application. The communication apparatus 900 includes at least an input/output interface 902. The communication apparatus 900 may be a chip or an integrated circuit.

Optionally, the communication apparatus further includes a logic circuit 901.

The transceiver unit 802 shown in FIG. 8 may be a communication interface. The communication interface may be the input/output interface 902 in FIG. 9, and the input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive first information, where the first information indicates N pieces of configuration information, the N pieces of configuration information are used to configure resources of N model parameters, and N is a positive integer. The logic circuit 901 is configured to determine first configuration information in the N pieces of configuration information. The input/output interface 902 is further configured to receive a first model parameter based on the first configuration information, where the first model parameter is used to determine a first neural network model corresponding to local information.

Optionally, the logic circuit 901 is configured to determine first information, where the first information indicates N pieces of configuration information, the N pieces of configuration information are used to configure resources of N model parameters, N is a positive integer, and one of the N model parameters is used to determine a neural network model corresponding to local information of a first node. The input/output interface 902 is configured to send the first information.

Optionally, the input/output interface 902 is configured to receive second information, where the second information indicates M pieces of configuration information, the M pieces of configuration information are used to configure transmission resources of M model parameters, parameter sizes of the M model parameters are different, and M is an integer greater than 1. The logic circuit 901 is configured to determine second configuration information in the M pieces of configuration information. The input/output interface 902 is further configured to receive a second model parameter based on the second configuration information, where a parameter size of the second model parameter is the same as (or similar to) a local parameter size.

Optionally, the logic circuit 901 is configured to determine second information, where the second information indicates M pieces of configuration information, the M pieces of configuration information are used to configure transmission resources of M model parameters, parameter sizes of the M model parameters are different, and M is an integer greater than 1. The input/output interface 902 is configured to send the second information.

Optionally, the input/output interface 902 is configured to receive third information, where the third information indicates K pieces of configuration information, the K pieces of configuration information are used to configure transmission resources of K model parameters, parameter sizes of the K model parameters are different, and K is an integer greater than 1. The logic circuit 901 is configured to determine third configuration information in the K pieces of configuration information. The input/output interface 902 is further configured to send a third model parameter based on the third configuration information, where a parameter size of the third model parameter is the same as (or similar to) the local parameter size.

Optionally, the logic circuit 901 is configured to determine third information, where the third information indicates K pieces of configuration information, the K pieces of configuration information are used to configure transmission resources of K model parameters, parameter sizes of the K model parameters are different, and K is an integer greater than 1. The input/output interface 902 is configured to send the third information.

The logic circuit 901 and the input/output interface 902 may further perform another step performed by the first node or the second node in any embodiment, and implement a corresponding beneficial effect. Details are not described herein again.

In a possible implementation, the processing unit 801 shown in FIG. 8 may be the logic circuit 901 in FIG. 9.

Optionally, the logic circuit 901 may be a processing apparatus. A part or all of functions of the processing apparatus may be implemented by using software. The part or all of the functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may only include the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processor units (central processor unit, CPU), network processors (network processor, NP), digital signal processing circuits (digital signal processor, DSP), micro controller units (micro controller unit, MCU), programmable controllers (programmable logic device, PLD), another integrated chip, any combination of the foregoing chips or processors, or the like.

FIG. 10 shows a communication apparatus 1000 in the foregoing embodiments according to an embodiment of this application. The communication apparatus 1000 may be specifically a communication apparatus serving as a terminal device in the foregoing embodiments. An example shown in FIG. 10 is that the terminal device is implemented as the terminal device (or a component in the terminal device).

In a possible diagram of a logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10. The communication port 1002 may include an input interface and an output interface. Alternatively, the communication port 1002 may be a transceiver circuit, and the transceiver circuit may include an input interface circuit and an output interface circuit.

Further optionally, the apparatus may include at least one of a memory 1003 and a bus 1004. In this embodiment of this application, the at least one processor 1001 is configured to control an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1000 shown in FIG. 10 may be specifically configured to implement steps implemented by the terminal device in the foregoing method embodiments, and implement technical effects corresponding to the terminal device. For a specific implementation of the communication apparatus shown in FIG. 10, refer to the descriptions in the foregoing method embodiments. Details are not described herein again.

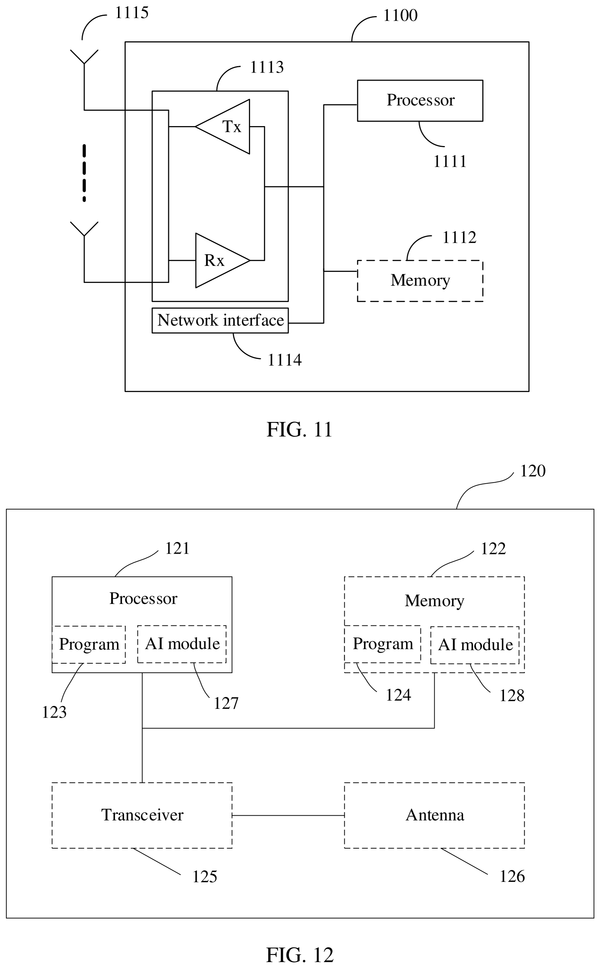

FIG. 11 is a diagram of a structure of a communication apparatus 1100 in the foregoing embodiment according to an embodiment of this application. The communication apparatus 1100 may be specifically the communication apparatus serving as the network device in the foregoing embodiment. In the example shown in FIG. 11, the network device is implemented as a network device (or a component in a network device). For a structure of the communication apparatus, refer to the structure shown in FIG. 11.

The communication apparatus 1100 includes at least one processor 1111 and at least one network interface 1114. Further optionally, the communication apparatus includes at least one memory 1112, at least one transceiver 1113, and one or more antennas 1115. The processor 1111, the memory 1112, the transceiver 1113, and the network interface 1114 are connected, for example, through a bus. In this embodiment of this application, the connection may include various interfaces, transmission lines, buses, or the like. This is not limited in this embodiment. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11. The network interface 1114 may include an input interface and an output interface. Alternatively, the network interface 1114 may be a transceiver circuit, and the transceiver circuit may include an input interface circuit and an output interface circuit.

The processor 1111 is mainly configured to process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1111 in FIG. 11. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into one chip. The memory 1112 can store program code for executing the technical solution in embodiments of this application, and the processor 1111 controls execution of the program code. Various types of executed computer program code may also be considered as drivers of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between the communication apparatus and a terminal, and the transceiver 1113 may be connected to the antenna 1115. The transceiver 1113 includes a transmitter Tx and a receiver Rx. Specifically, the one or more antennas 1115 may receive radio frequency signals. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation processing and decoding processing, on the digital baseband signal or the digital intermediate frequency signal. In addition, the transmitter Tx of the transceiver 1113 is further configured to receive a modulated digital baseband signal or a modulated digital intermediate frequency signal from the processor 1111, convert the modulated digital baseband signal or the modulated digital intermediate frequency signal into a radio frequency signal, and send the radio frequency signal through the one or more antennas 1115. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter machine, a transmitter, a transmitter circuit, or the like.

It should be noted that, the communication apparatus 1100 shown in FIG. 11 may be specifically configured to implement steps implemented by the network device in the foregoing method embodiments, and implement technical effects corresponding to the network device. For a specific implementation of the communication apparatus 1100 shown in FIG. 11, refer to the descriptions in the foregoing method embodiments. Details are not described herein again.

FIG. 12 is a diagram of a structure of a communication apparatus in the foregoing embodiment according to an embodiment of this application.

It may be understood that the communication apparatus 120 includes, for example, modules, units, elements, circuits, or interfaces, which are appropriately configured together to perform the technical solutions provided in this application. The communication apparatus 120 may be the RAN node, the terminal, the core network device, or another network device described above, or may be a component (for example, a chip) in these devices, to implement a method described in the following method embodiments. The communication apparatus 120 includes one or more processors 121. The processor 121 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the foregoing embodiments. In another possible design, the communication apparatus 120 includes a circuit (not shown in FIG. 12).

Optionally, the communication apparatus 120 may include one or more memories 122 storing a program 124 (which may also be referred to as code or instructions sometimes). The program 124 may be run on the processor 121, so that the communication apparatus 120 performs the method described in the foregoing method embodiments.

Optionally, the processor 121 and/or the memory 122 may include AI modules 127 and 128, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 may also be referred to as a processing unit sometimes, and controls the communication apparatus (for example, the RAN node or the terminal). The transceiver 125 may also be referred to as a transceiver unit, a transceiver machine, a transceiver circuit, a transceiver, or the like sometimes, and is configured to implement a transceiver function of the communication apparatus through the antenna 126.

The transceiver unit 802 shown in FIG. 8 may be a communication interface. The communication interface may be the transceiver 125 in FIG. 12. The transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first node or the second node in the foregoing embodiments.

An embodiment of this application further provides a computer program product (also referred to as a computer program). When the computer program product is executed by a processor, the processor performs the method in the possible implementations of the first node or the second node.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first node or the second node in the foregoing method embodiments.

An embodiment of this application further provides a communication system. The network system architecture includes the first node and the second node in any one of the foregoing embodiments. The first node may be a terminal device or a network device, and the second node may also be a terminal device or a network device.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making contribution, or all or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1.  A communication method, comprising:

    receiving first information, wherein the first information indicates N pieces of configuration information, the N pieces of configuration information are used to configure resources of N model parameters, and N is a positive integer; and

receiving a first model parameter based on first configuration information in the N pieces of configuration information, wherein the first model parameter is used to determine a first neural network model corresponding to local information.

2. The method according to claim 1, wherein the local information comprises at least one of a local resource overhead level, local AI capability information, and a local parameter size.

3. The method according to claim 1 or 2, wherein the model parameter comprises at least one of a weight of a model, an activation function of the model, and an offset of the model.

4. The method according to any one of claims 1 to 3, wherein N is an integer greater than 1, parameter sizes of the N model parameters are different, and the method further comprises:
determining the first configuration information in the N pieces of configuration information based on the local information.

5. The method according to any one of claims 1 to 3, wherein a value of N is 1, the first model parameter is used to configure a neural network model shared by at least two first nodes, and the method further comprises:
performing, based on the local information, knowledge distillation processing on the neural network model shared by the at least two first nodes, to obtain the first neural network model.

6. The method according to any one of claims 1 to 5, wherein the method further comprises:

receiving second information, wherein the second information indicates M pieces of configuration information, the M pieces of configuration information are used to configure transmission resources of M model parameters, parameter sizes of the M model parameters are different, and M is an integer greater than 1; and
receiving a second model parameter based on second configuration information in the M pieces of configuration information, wherein a parameter size of the second model parameter is the same as the local parameter size.

7. The method according to claim 6, wherein any one of the M pieces of configuration information comprises at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, wherein the parameter type comprises a gradient and/or a weight;
indication information indicating a frequency domain resource of the transmission resource configured by using the one piece of configuration information; and
indication information indicating a time domain resource of the transmission resource configured by using the one piece of configuration information.

8. The method according to any one of claims 1 to 7, wherein the method further comprises:

receiving third information, wherein the third information indicates K pieces of configuration information, the K pieces of configuration information are used to configure transmission resources of K model parameters, parameter sizes of the K model parameters are different, and K is an integer greater than 1; and
sending a third model parameter based on third configuration information in the K pieces of configuration information, wherein a parameter size of the third model parameter is the same as the local parameter size.

9. The method according to claim 8, wherein any one of the K pieces of configuration information comprises at least one of the following:

indication information indicating a parameter size of a model parameter configured by using the one piece of configuration information;
indication information indicating a transmit power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

10. The method according to any one of claims 1 to 9, wherein before the receiving the first information, the method further comprises:

receiving fourth information, wherein the fourth information indicates a resource for carrying request information, and the request information is used to request the N pieces of configuration information; and

sending the request information on the resource for carrying the request information.

11. The method according to claim 10, wherein the request information comprises a first orthogonal sequence, and the first orthogonal sequence corresponds to the local information.

12. The method according to any one of claims 1 to 11, wherein before the receiving the first information, the method further comprises:

receiving fifth information, wherein the fifth information indicates local information corresponding to each of the N model parameters, and/or the fifth information indicates whether the first information comprises the N pieces of configuration information.

13. A communication method, comprising:

determining first information, wherein the first information indicates N pieces of configuration information, the N pieces of configuration information are used to configure resources of N model parameters, N is a positive integer, and one of the N model parameters is used to determine a neural network model corresponding to local information of a first node; and

sending the first information.

14. The method according to claim 13, wherein the local information comprises at least one of a local resource overhead level, local AI capability information, and a local parameter size.

15. The method according to claim 13 or 14, wherein the model parameter comprises at least one of a weight of a model, an activation function of the model, and an offset of the model.

16. The method according to any one of claims 13 to 15, wherein N is an integer greater than 1, and parameter sizes of the N model parameters are different.

17. The method according to any one of claims 13 to 15, wherein a value of N is 1.

18. The method according to any one of claims 13 to 17, wherein the method further comprises:

sending second information, wherein the second information indicates M pieces of configuration information, the M pieces of configuration information are used to configure transmission resources of M model parameters, parameter sizes of the M model parameters are different, and M is an integer greater than 1; and

sending a part or all of the M model parameters based on the M pieces of configuration information.

19. The method according to claim 18, wherein any one of the M pieces of configuration information comprises at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information; and

indication information indicating a time domain resource of the transmission resource configured by using the one piece of configuration information.

20. The method according to any one of claims 13 to 19, wherein the method further comprises:

sending third information, wherein the third information indicates K pieces of configuration information, the K pieces of configuration information are used to configure transmission resources of K model parameters, parameter sizes of the K model parameters are different, and K is an integer greater than 1; and

receiving a part or all of the K model parameters based on the K pieces of configuration information.

21. The method according to claim 20, wherein any one of the K pieces of configuration information comprises at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

22. The method according to any one of claims 13 to 21, wherein before the sending the first information, the method further comprises:

sending fourth information, wherein the fourth information indicates a resource for carrying request information, and the request information is used to request the N pieces of configuration information; and

receiving the request information on the resource for carrying the request information.

23. The method according to claim 22, wherein the request information comprises a first orthogonal sequence, and the first orthogonal sequence corresponds to the local parameter size.

24. The method according to any one of claims 13 to 23, wherein before the receiving the first information, the method further comprises:

sending fifth information, wherein the fifth information indicates local information corresponding to each of the N model parameters, and/or the fifth information indicates whether the first information comprises the N pieces of configuration information.

25. A communication apparatus, comprising a processing unit and a transceiver unit, wherein

the transceiver unit is configured to receive first information, wherein the first information indicates N pieces of configuration information, the N pieces of configuration information are used to configure resources of N model parameters, and N is a positive integer;

the processing unit is configured to determine first configuration information in the N pieces of configuration information; and

the transceiver unit is further configured to receive a first model parameter based on the first configuration information, wherein the first model parameter is used to determine a first neural network model corresponding to local information.

26. The apparatus according to claim 25, wherein the local information comprises at least one of a local resource overhead level, local AI capability information, and a local parameter size.

27. The apparatus according to claim 25 or 26, wherein the model parameter comprises at least one of a weight of a model, an activation function of the model, and an offset of the model.

28. The apparatus according to any one of claims 25 to 27, wherein N is an integer greater than 1, parameter sizes of the N model parameters are different, and the processing unit is further configured to determine the first configuration information in the N pieces of configuration information based on the local information.

29. The apparatus according to any one of claims 25 to 27, wherein a value of N is 1, the first model parameter is used to configure a neural network model shared by at least two first nodes, and the processing unit is further configured to perform, based on the local information, knowledge distillation processing on the neural network model shared by the at least two first nodes, to obtain the first neural network model.

30. The apparatus according to any one of claims 25 to 29, wherein

the transceiver unit is further configured to receive second information, wherein the second information indicates M pieces of configuration information, the M pieces of configuration information are used to configure transmission resources of M model parameters, parameter sizes of the M model parameters are different, and M is an integer greater than 1;
the processing unit is further configured to determine second configuration information in the M pieces of configuration information; and
the transceiver unit is further configured to receive a second model parameter based on the second configuration information, wherein a parameter size of the second model parameter is the same as the local parameter size.

31. The apparatus according to claim 30, wherein any one of the M pieces of configuration information comprises at least one of the following:

indication information indicating a parameter size of a model parameter configured by using the one piece of configuration information;
indication information indicating a receive power of a transmission resource configured by using the one piece of configuration information;
indication information indicating a parameter type of the model parameter configured by using the one piece of configuration information, wherein the parameter type comprises a gradient and/or a weight;
indication information indicating a frequency domain resource of the transmission resource configured by using the one piece of configuration information; and
indication information indicating a time domain resource of the transmission resource configured by using the one piece of configuration information.

32. The apparatus according to any one of claims 25 to 31, wherein

the transceiver unit is further configured to receive third information, wherein the third information indicates K pieces of configuration information, the K pieces of configuration information are used to configure transmission resources of K model parameters, parameter sizes of the K model parameters are different, and K is an integer greater than 1;
the processing unit is further configured to determine third configuration information in the K pieces of configuration information; and
the transceiver unit is further configured to send a third model parameter based on the third configuration information, wherein a parameter size of the third model parameter is the same as the local parameter size.

33. The apparatus according to claim 32, wherein any one of the K pieces of configuration information comprises at least one of the following:

indication information indicating a parameter size of a model parameter configured by using the one piece of configuration information;
indication information indicating a transmit power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

34. The apparatus according to any one of claims 25 to 33, wherein

the transceiver unit is further configured to receive fourth information, wherein the fourth information indicates a resource for carrying request information, and the request information is used to request the N pieces of configuration information; and

the transceiver unit is further configured to send the request information on the resource for carrying the request information.

35. The apparatus according to claim 34, wherein the request information comprises a first orthogonal sequence, and the first orthogonal sequence corresponds to the local parameter size.

36. The apparatus according to any one of claims 25 to 35, wherein the transceiver unit is further configured to receive fifth information, wherein the fifth information indicates local information corresponding to each of the N model parameters, and/or the fifth information indicates whether the first information comprises the N pieces of configuration information.

37. A communication apparatus, comprising a processing unit and a transceiver unit, wherein

the processing unit is configured to determine first information, wherein the first information indicates N pieces of configuration information, the N pieces of configuration information are used to configure resources of N model parameters, N is a positive integer, and one of the N model parameters is used to determine a neural network model corresponding to local information of a first node; and

the transceiver unit is configured to send the first information.

38. The apparatus according to claim 37, wherein the local information comprises at least one of a local resource overhead level, local AI capability information, and a local parameter size.

39. The apparatus according to claim 37 or 38, wherein the model parameter comprises at least one of a weight of a model, an activation function of the model, and an offset of the model.

40. The apparatus according to any one of claims 37 to 39, wherein N is an integer greater than 1, and parameter sizes of the N model parameters are different.

41. The apparatus according to any one of claims 37 to 39, wherein a value of N is 1.

42. The apparatus according to any one of claims 37 to 41, wherein

the transceiver unit is further configured to send second information, wherein the second information indicates M pieces of configuration information, the M pieces of configuration information are used to configure transmission resources of M model parameters, parameter sizes of the M model parameters are different, and M is an integer greater than 1; and

the transceiver unit is further configured to send a part or all of the M model parameters based on the M pieces of configuration information.

43. The apparatus according to claim 42, wherein any one of the M pieces of configuration information comprises at least one of the following:

indication information indicating a parameter size of a model parameter configured by using the one piece of configuration information;

indication information indicating a receive power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information; and

indication information indicating a time domain resource of the transmission resource configured by using the one piece of configuration information.

44. The apparatus according to any one of claims 37 to 43, wherein

the transceiver unit is further configured to send third information, wherein the third information indicates K pieces of configuration information, the K pieces of configuration information are used to configure transmission resources of K model parameters, parameter sizes of the K model parameters are different, and K is an integer greater than 1; and

the transceiver unit is further configured to receive a part or all of the K model parameters based on the K pieces of configuration information.

45. The apparatus according to claim 44, wherein any one of the K pieces of configuration information comprises at least one of the following:

indication information indicating a parameter size of a model parameter configured by using the one piece of configuration information;

indication information indicating a transmit power of a transmission resource configured by using the one piece of configuration information;

indication information indicating a parameter type of the model parameter configured by using the one piece of configuration information, wherein the parameter type comprises a gradient and/or a weight;

indication information indicating a frequency domain resource of the transmission resource configured by using the one piece of configuration information;

indication information indicating a time domain resource of the transmission resource configured by using the one piece of configuration information; and

indication information indicating an index of the transmission resource of the one piece of configuration information in the transmission resources configured by using the K pieces of configuration information.

46. The apparatus according to any one of claims 37 to 45, wherein

the transceiver unit is further configured to send fourth information, wherein the fourth information indicates a resource for carrying request information, and the request information is used to request the N pieces of configuration information; and

the transceiver unit is further configured to receive the request information on the resource for carrying the request information.

47. The apparatus according to claim 46, wherein the request information comprises a first orthogonal sequence, and the first orthogonal sequence corresponds to the local parameter size.

48. The apparatus according to any one of claims 37 to 47, wherein

the transceiver unit is further configured to send fifth information, wherein the fifth information indicates local information corresponding to each of the N model parameters, and/or the fifth information indicates whether the first information comprises the N pieces of configuration information.

49. A communication apparatus, comprising at least one processor, configured to execute a computer program or instructions in a memory to implement the method according to any one of claims 1 to 12.

50. A communication apparatus, comprising at least one processor, configured to execute a computer program or instructions in a memory to implement the method according to any one of claims 13 to 24.

51. A communication system, wherein the system comprises the communication apparatus according to any one of claims 25 to 36, and is configured to perform the communication apparatus according to any one of claims 37 to 48; or

the system comprises the communication apparatus according to claim 49 and the communication apparatus according to claim 50.

52. A computer-readable storage medium, wherein the medium stores instructions, and when the instructions are executed by a computer, the method according to any one of claims 1 to 24 is implemented.

53. A computer program product, comprising instructions, wherein when the instructions are run on a computer, the computer is enabled to perform the method according to any one of claims 1 to 24.

FIG. 1a

FIG. 1b

Television

Mobile
phone

FIG. 1c

$w_0 x_0$

Neuron

$w_1 x_1$

$$y = f\left(\sum_{i=0}^{n} w_i x_i + b\right)$$

$y$

$w_n x_n$

FIG. 1d

FIG. 1e

FIG. 2a

FIG. 2b

FIG. 2c

Central node

$G_n$

$G_k$

$G_m$

$W$

$W$

$W$

Distributed
node $n$

Distributed
node $k$

Distributed
node $m$

FIG. 2d

First node

Second node

S301: First indication, where the first
information indicates N pieces of
configuration information

S302: Receive a first model parameter
based on first configuration information in
the N pieces of configuration information

FIG. 3

FIG. 4a

FIG. 4b

Cat0    Cat1    Cat2    Cat3         Cat0         Cat1    Cat2    Cat3

**Time domain**

**Global model
parameter**

**Local model
parameter**

FIG. 4c

First node

Second node

S501: Second information, where the
second information indicates M
pieces of configuration information

S502: Receive a second model
parameter based on second
configuration information in the M
pieces of configuration information

FIG. 5

First node

Second node

S601: Third information, where the
third information indicates K pieces of
configuration information

S602: Send a third model parameter based
on third configuration information in the
K pieces of configuration information

FIG. 6

FIG. 7

800

Communication apparatus

801

Processing unit

802

Transceiver unit

FIG. 8

900

Communication apparatus

901

Logic circuit

902

Input/Output interface

FIG. 9

1000

Communication apparatus

1002

Communication port

1001

Processor

1004

1003

Memory

FIG. 10

FIG. 11

FIG. 12

**INTERNATIONAL SEARCH REPORT**

International application No.

**PCT/CN2023/110912**

| A. | CLASSIFICATION OF SUBJECT MATTER |
|---|---|

H04W72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 3GPP: 参数, 模型, 配置, 初始化, 神经网络, 资源, 人工智能, AI, parameter, model, neural network, resource, configure

| C. | DOCUMENTS CONSIDERED TO BE RELEVANT | | |
|---|---|---|---|
| Category* | Citation of document, with indication, where appropriate, of the relevant passages | | Relevant to claim No. |
| X | CN 116419257 A (HUAWEI TECHNOLOGIES CO., LTD.) 11 July 2023 (2023-07-11) description, paragraphs [0076]-[0326] | | 1-53 |
| X | CN 116151348 A (HUAWEI TECHNOLOGIES CO., LTD.) 23 May 2023 (2023-05-23) description, paragraphs [0092]-[0311] | | 1-53 |
| A | CN 116502811 A (XINZHI WOLAI NETWORK TECHNOLOGY CO., LTD.) 28 July 2023 (2023-07-28) entire document | | 1-53 |
| A | WO 2023272432 A1 (HUAWEI TECHNOLOGIES CO., LTD.) 05 January 2023 (2023-01-05) entire document | | 1-53 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 April 2024** | **08 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/110912**

| Patent document cited in search report | | | Publication date (day/month/year) | Patent family member(s) | | | Publication date (day/month/year) |
|---|---|---|---|---|---|---|---|
| CN | 116419257 | A | 11 July 2023 | WO | 2023125660 | A1 | 06 July 2023 |
| CN | 116151348 | A | 23 May 2023 | WO | 2023088465 | A1 | 25 May 2023 |
| CN | 116502811 | A | 28 July 2023 | WO | 2023134181 | A1 | 20 July 2023 |
| WO | 2023272432 | A1 | 05 January 2023 | CN | 117501300 | A | 02 February 2024 |

Form PCT/ISA/210 (patent family annex) (July 2022)